# EUROPEAN PATENT APPLICATION

(11) **EP 4 840 822 A1**
(43) Date of publication of application: **18.11.2026**
(21) Application number: 25721147.4
(22) Date of filing: 31.03.2025
(51) Int. Cl.: C01B 25/45

(54) **IRON PHOSPHATE MATERIAL, AND POSITIVE ELECTRODE MATERIAL, PREPARATION METHOD THEREFOR, AND USE THEREOF**

(30) Priority: 27.03.2025 CN 202510376730
(71) Applicant: Hubei Wanrun New Energy Technology Co., Ltd., Shiyan, Hubei 442500 (CN)
(72) Inventor: LIU, Yandong, Shiyan, Hubei 442500 (CN); YANG, Jiaojiao, Shiyan, Hubei 442500 (CN); JIANG, Xuelin, Shiyan, Hubei 442500 (CN); YI, Haoran, Shiyan, Hubei 442500 (CN)
(74) Representative: Manitz Finsterwald Patent- und Rechtsanwaltspartnerschaft mbB
(86) International application number: PCT/CN2025/086121
(87) International publication number: WO 2026/199607

(57) **Abstract**

The present application provides an iron phosphate material, a cathode material, and a preparation method thereof and application thereof, which belong to the field of lithium-ion battery technology. The iron phosphate material is represented by a general formula Fe₁₋ₓMₓPO₄·2H₂O, wherein M is selected from the group consisting of Mg, Ce, and a combination thereof, and 0.008≤x≤0.016. In the iron phosphate material of the embodiment of the present application, the dihydrate iron phosphate material is doped with element M, partially substituting element iron, thereby reducing the iron-to-phosphorus ratio of the iron phosphate material within an appropriate range, which promotes particle growth of the iron phosphate material. This approach facilitates the preparation of iron phosphate material with uniform particle size, and is beneficial to reducing the magnetic impurity content in the prepared cathode material and improving capacity of the cathode material, thereby improving the electrochemical performance of the cathode material.

## Description

### TECHNICAL FIELD

The present application relates to the field of lithium-ion battery technology, specifically to an iron phosphate material, a cathode material, and a preparation method thereof and application thereof.

### BACKGROUND

Lithium iron phosphate (LiFePO₄) is an electrode material that is widely used in lithium-ion batteries. Currently, lithium iron phosphate materials are typically prepared using anhydrous iron phosphate as a precursor. In the preparation process, anhydrous iron phosphate, a lithium source, and a carbon source are mixed and sintered to form the lithium iron phosphate material.

In prior arts using anhydrous iron phosphate to prepare lithium iron phosphate, the particle size distribution of anhydrous iron phosphate is difficult to control, and there is an excessive proportion of small particles, along with a significant number of large particles, resulting in uneven particle size distribution in the obtained lithium iron phosphate material, which is difficult to achieve a balance between compaction density of the lithium iron phosphate material and the electrochemical performance, such as discharge capacity and rate performance. Introducing a dopant during the mixing of anhydrous iron phosphate, the lithium source, and the carbon source to produce a doped lithium iron phosphate material can improve the capacity thereof. However, as the amount of dopant increases, the capacity improvement effect becomes limited, and issues such as reduced compaction density and increased magnetic impurity content arise, making it equally difficult to balance the compaction density with the electrochemical performance, such as discharge capacity and rate performance of the lithium iron phosphate material.

Based upon the above situation, further research is still needed on how to improve the performance of iron phosphate material, so as to enhance the material properties of lithium iron phosphate material and thereby obtain lithium iron phosphate material with improved electrochemical performance.

### SUMMARY

In view of the technical issues existing in the background, the present application provides an iron phosphate material, a cathode material, and a preparation method thereof and application thereof. The iron phosphate material of the present application is prepared by doping dihydrate iron phosphate to partially substitute element iron, appropriately reducing an iron-to-phosphorus ratio of the iron phosphate material, and promoting particle growth of the iron phosphate material. This approach facilitates the obtaining of iron phosphate material with uniform particle size, and is beneficial to reducing the magnetic impurity content in the prepared cathode material and improving capacity of the cathode material, thereby improving the electrochemical performance of the cathode material.

In a first aspect, an embodiment of the present application provides an iron phosphate material, which is represented by a general formula Fe₁₋ₓMₓPO₄·2H₂O, wherein M is selected from the group consisting of Mg, Ce, and a combination thereof, and 0.008≤x≤0.016.

In the technical solution of the embodiment of the present application, the dihydrate iron phosphate material is doped with element M, partially substituting element iron, thereby reducing the iron-to-phosphorus ratio of the iron phosphate material within an appropriate range, which promotes particle growth of the iron phosphate material. This approach facilitates the obtaining of iron phosphate material with uniform particle size, and is beneficial to reducing the magnetic impurity content in the prepared cathode material and improving capacity of the cathode material, thereby improving the electrochemical performance of the cathode material.

In some embodiments, an average particle size of primary particles of the iron phosphate material is in a range from 200 nm to 300 nm.

In these embodiments, within the above average particle size range of primary particles of the iron phosphate material, the particle size of the iron phosphate material is more suitable, and the cathode material prepared from the iron phosphate material can have more appropriate particle size and distribution, thereby achieving a higher compaction density while also improving capacity.

In some embodiments, in the primary particles of the iron phosphate material, a quantity proportion of primary particles with a particle size less than 100 nm is in a range from 15.3% to 23.7%, a quantity proportion of primary particles with a particle size between 100 nm and 400 nm is in a range from 63.3% to 73.6%, a quantity proportion of primary particles with a particle size greater than 400 nm but less than or equal to 1000 nm is in a range from 9.6% to 17.5%, and a quantity proportion of primary particles with a particle size greater than 1000 nm is in a range from 0.8% to 2.8%.

In these embodiments, the primary particles of the iron phosphate material have more suitable particle size distribution, allowing the cathode material prepared from the iron phosphate material to have more uniform particle size, thereby achieving relatively high compaction density while also improving capacity.

In some embodiments, an iron-to-phosphorus ratio of the iron phosphate material is in a range from 0.964 to 0.981.

In these embodiments, the above range of the iron-to-phosphorus ratio of the iron phosphate material is beneficial to achieving an appropriate particle size of the iron phosphate material, thereby allowing the cathode material prepared from the iron phosphate material to have more suitable particle size and distribution, achieving relatively high compaction density while also improving capacity.

In a second aspect, an embodiment of the present application provides a cathode material, which is represented by a general formula LiFe_{1-y-z}M_{y}N₂PO₄@C, wherein M is selected from the group consisting of Mg, Ce, and a combination thereof, N is selected from the group consisting of Ti, Mn, and a combination thereof, 0.008≤y≤0.016, and 0.001≤z≤0.03.

In the technical solution of the embodiment of the present application, multi-level and multi-element doping of the lithium iron phosphate material with elements M and N is performed, which significantly improves the charge specific capacity and the discharge specific capacity of the cathode material. Meanwhile, within the doping range of element M and the doping range of element N, the cathode material can achieve relatively high compaction density while also exhibiting improved electrochemical performance, such as relatively high charge specific capacity, relatively high discharge specific capacity, and excellent rate performance.

In some embodiments, an average particle size of primary particles of the cathode material is in a range from 340 nm to 415 nm.

In these embodiments, within the above average particle size range of primary particles of the cathode material, the particle size of the cathode material is more suitable, which is beneficial to achieving relatively high compaction density of the cathode material while also achieving improved electrochemical performance, such as relatively high charge specific capacity, relatively high discharge specific capacity, and excellent rate performance of the cathode material.

In some embodiments, in the primary particles of the cathode material, a quantity proportion of primary particles with a particle size less than 200 nm is in a range from 36.29% to 53.01%, a quantity proportion of primary particles with a particle size between 200 nm and 400 nm is in a range from 34.02% to 44.30%, a quantity proportion of primary particles with a particle size greater than 400 nm but less than or equal to 1000 nm is in a range from 8.05% to 17.48%, and a quantity proportion of primary particles with a particle size greater than 1000 nm is in a range from 0.60% to 1.93%.

In these embodiments, within the above particle size distribution proportion ranges of the primary particles of the cathode material, the cathode material has more suitable particle size distribution, which is beneficial to achieving relatively high compaction density of the cathode material while also achieving improved electrochemical performance, such as relatively high charge specific capacity, relatively high discharge specific capacity, and excellent rate performance of the cathode material.

In some embodiments, a compaction density of the cathode material under a pressure of 3 kN is in a range from 2.57 g/cm³ to 2.68 g/cm³.

In these embodiments, the cathode material has relatively high compaction density, which is beneficial to improving the energy density of the cathode material, thereby enhancing the electrochemical performance of the cathode material.

In some embodiments, a powder resistivity of the cathode material is in a range from 8.6 Ω·cm to 14 Ω·cm.

In these embodiments, the cathode material within the above range of powder resistivity exhibits relatively high electron conductivity, facilitating thorough exploitation of the electrochemical performance of the active material in the cathode material and allowing more active material to participate in electrochemical reactions, thereby increasing the capacity of the secondary battery.

In some embodiments, a specific surface area of the cathode material is in a range from 10 m²/g to 13 m²/g.

In these embodiments, the specific surface area within the above range is beneficial to controlling the contact area with an electrolyte and the reaction activity of the cathode material, thereby improving the electrochemical performance, such as the charge rate and the discharge rate of the cathode material.

In some embodiments, a magnetic impurity content in the cathode material is less than or equal to 0.10 ppm.

In these embodiments, the magnetic impurity content within the above range in the cathode material is beneficial to improving the safety and reliability of the secondary battery using the cathode material.

In a third aspect, an embodiment of the present application provides a method for preparing a cathode material, including following steps:
mixing a first doping source with a ferrous solution to form a mixed solution;
mixing the mixed solution with a first phosphorus source and a first oxidizing agent and performing a first reaction treatment to obtain a first slurry;
mixing the first slurry with a second phosphorus source and a second oxidizing agent and performing a second reaction treatment to obtain a second slurry;
subjecting the second slurry to a first solid-liquid separation to obtain a first solid-phase material;
mixing the first solid-phase material with a phosphoric acid solution and performing an aging treatment to obtain a third slurry;
subjecting the third slurry to a second solid-liquid separation to obtain a second solid-phase material;
subjecting the second solid-phase material to crystallization to obtain an iron phosphate material;
mixing the iron phosphate material, a lithium source, a second doping source, a surfactant, a carbon source, and a solvent to obtain a precursor slurry;
subjecting the precursor slurry to a grinding treatment and a drying treatment to obtain a precursor; and
sintering the precursor to obtain the cathode material;
wherein the first doping source contains a first doping element selected from the group consisting of Mg, Ce, and a combination thereof, a ratio of amount of substance of iron in the ferrous solution to the first doping element is (1-x):x, and 0.008≤x≤0.016; the second doping source contains a second doping element selected from the group consisting of Ti, Mn, and a combination thereof, a ratio of amount of substance of iron in the iron phosphate material to the second doping element is (1-y-z):z, 0.008≤y≤0.016, and 0.001≤z≤0.03.

In the technical solution of the embodiment of the present application, the preparation of the first solid-phase material is carried out in two steps. Nucleation partially occurs during the first reaction treatment, and the nuclei formed in the first step grow during the second reaction treatment, reducing the generation of small particles, thereby achieving an iron phosphate material with uniform particle size distribution and appropriate particle size. During the preparation of the iron phosphate material, the ferrous solution is mixed with the first doping source, and the cations of the first doping element coprecipitate with ferrous ions to form an internally doped compound, facilitating uniform doping and growth of the iron phosphate material, thereby obtaining an iron phosphate material with more uniform particle size distribution and doped with the first element. By doping the dihydrate iron phosphate material with element M which partially substitutes iron, the iron-to-phosphorus ratio in the iron phosphate material is appropriately reduced, promoting particle growth of the iron phosphate material and facilitating the preparation of an iron phosphate material with uniform particle size. In addition, this approach is also beneficial to reducing magnetic impurity content in the prepared cathode material and improve the capacity of the cathode material, thereby improving the electrochemical performance of the cathode material. During the preparation of the precursor, the second doping element is introduced, and the ratio of amount of substance of iron in the iron phosphate material to the second doping element is controlled to (1-y-z):z, wherein 0.008≤y≤0.016 and 0.001≤z≤0.03. Through this two-step doping process, the cathode material can be doped with less second doping element, improving rate performance of the cathode material. In the preparation method of the present application, a surfactant is introduced during grinding to improve the dispersibility of the iron phosphate material and reduce aggregation of the iron phosphate material during grinding, facilitating uniform particle growth during sintering, thereby achieving a cathode material with more uniform particle size distribution and appropriate particle size. The cathode material prepared by the method of the embodiment of the present application achieves high compaction density and improved electrochemical performance, such as high charge specific capacity, high discharge specific capacity, and excellent rate performance.

In some embodiments, the step of mixing the mixed solution with the first phosphorus source and the first oxidizing agent, and performing the first reaction treatment to obtain the first slurry includes:
mixing the mixed solution with the first phosphorus source and the first oxidizing agent at a first mixing temperature for a first mixing time period, then reacting at a first reaction temperature for a first reaction time period to obtain the first slurry;
wherein the first mixing temperature is in a range from 25 °C to 50 °C, the first mixing time period is in a range from 20 min to 40 min, the first reaction time period is in a range from 20 min to 40 min, and the first reaction temperature is in a range from 50 °C to 70 °C.

In these embodiments, the first mixing temperature, the first mixing time period, the first reaction time period, and the first reaction temperature within the above ranges facilitate more complete growth of nuclei, thus facilitating the preparation of an iron phosphate material with more uniform particle size distribution and appropriate particle size.

In some embodiments, the step of mixing the first slurry with the second phosphorus source and the second oxidizing agent and performing the second reaction treatment to obtain the second slurry includes:
mixing the mixed solution with the second phosphorus source at a second mixing temperature for a second mixing time period to obtain a fourth slurry;
mixing the fourth slurry with the second oxidizing agent at a third mixing temperature for a third mixing time period, then reacting at a second reaction temperature for a second reaction time period to obtain the second slurry;
wherein the second mixing temperature is in a range from 45 °C to 60 °C, the second mixing time period is in a range from 3 min to 8 min, the third mixing temperature is in a range from 50 °C to 60 °C, the third mixing time period is in a range from 10 min to 16 min, the second reaction time period is in a range from 50 min to 70 min, and the second reaction temperature is in a range from 50 °C to 70 °C;
a mass ratio of the first phosphorus source to the second phosphorus source is (45 to 60):(40 to 55), and a mass ratio of the first oxidizing agent to the second oxidizing agent is (70 to 85):(15 to 30).

In these embodiments, the reaction parameters within the above ranges promote the growth of nuclei during the second reaction treatment, facilitating the preparation of an iron phosphate material with more uniform particle size distribution and appropriate particle size.

In some embodiments, the step of mixing the first solid-phase material with the phosphoric acid solution and performing the aging treatment to obtain the third slurry includes:
mixing the first solid-phase material with the phosphoric acid solution to reach a pH value in a range from 1.2 to 1.7, then aging at an aging temperature for an aging time period to obtain the third slurry;
wherein the aging temperature is in a range from 75 °C to 95 °C, the aging time period is in a range from 1.5 h to 2.5 h, and the pH value of the third slurry is in a range from 1.7 to 2.

In these embodiments, the parameters of aging within the above ranges facilitate uniform particle growth, thereby obtaining an iron phosphate material with more uniform particle size distribution and appropriate particle size.

In some embodiments, after subjecting the precursor slurry to the grinding treatment, a D50 particle size of solid particles in the precursor slurry is in a range from 0.2 µm to 0.5 µm.

In these embodiments, the D50 particle size of the solid particles within the above range in the precursor slurry facilitates the preparation of a cathode material with more uniform particle size distribution and appropriate particle size.

In some embodiments, a D50 particle size of the precursor is in a range from 3 µm to 6 µm.

In these embodiments, the D50 particle size of the precursor within the above range facilitates the preparation of a cathode material with more uniform particle size distribution and appropriate particle size.

In some embodiments, the surfactant is selected from the group consisting of isooctanol polyoxyethylene polyoxypropylene ether-9, polyethylene glycol, and a combination thereof; a mass of the surfactant is 0.02% to 0.1% of a mass of the iron phosphate material.

In these embodiments, the mass ratio of the surfactant to the iron phosphate material within the above range is beneficial to improving the dispersibility of the iron phosphate material particles, ensuring uniform heating of the particles during sintering, thereby enhancing the consistency of particle growth to obtain a cathode material with more uniform particle size distribution and appropriate particle size.

In some embodiments, the step of sintering the precursor to obtain the cathode material includes:
sintering the precursor at a first sintering temperature for a first sintering time period to obtain a pre-sintered material; and
sintering the pre-sintered material at a second sintering temperature for a second sintering time period to obtain the cathode material;
wherein the first sintering temperature is in a range from 400 °C to 500 °C, the first sintering time period is in a range from 1 h to 6 h, the second sintering temperature is in a range from 700 °C to 900 °C, and the second sintering time period is in a range from 4 h to 12 h.

In these embodiments, the parameters of the sintering treatment within the above ranges facilitate sufficient dehydration time and uniform heating of particles, resulting in better consistency in the growth of cathode material particles, thereby obtaining a cathode material with more uniform particle size distribution and appropriate particle size.

In a fourth aspect, an embodiment of the present application provides an electrode plate, including a current collector and an electrode active layer disposed on the current collector. The electrode active layer includes the cathode material described in any one of the above embodiments or the cathode material prepared by the preparation method described in any one of the above embodiments.

In these embodiments, the active layer of the cathode plate includes the above cathode material, thus exhibiting excellent electrochemical performance.

In a fifth aspect, an embodiment of the present application provides a secondary battery, including a cathode plate and an anode plate, wherein the cathode plate includes the above-described electrode plate.

In these embodiments, the secondary battery includes the above-described cathode plate, thus achieving comprehensively improved electrochemical performance and being suitable for various application scenarios.

The above description is merely a summary of the technical solutions of the present application. In order to clearly illustrate the technical solutions of the present application for implementation according to the contents of the specification, as well as to make the above and other objectives, features, and advantages of the present application more apparent and comprehensible, specific embodiments of the present application are described below.

### BRIEF DESCRIPTION OF THE DRAWINGS

In order to clearly illustrate the technical solutions of the present application, the drawings used in the present application will be briefly described below. Apparently, the drawings described below are merely for some embodiments of the present application. For those of ordinary skill in the art, other drawings can be obtained according to the disclosed drawings without any creative effort.
FIG. 1 shows a flow chart of a method for preparing a cathode material according to the present application.
FIG. 2 shows a scanning electron microscopic (SEM) image of an iron phosphate material in Example 1 of the present application.
FIG. 3 shows an SEM image of an iron phosphate material in Comparative Example 2.
FIG. 4 shows an SEM image of a cathode material in Example 1 of the present application.
FIG. 5 shows a particle size distribution diagram of the cathode material in Example 1 of the present application.
FIG. 6 shows an SEM image of a cathode material in Comparative Example 2.
FIG. 7 shows a particle size distribution diagram of the cathode material in Comparative Example 2.

### DETAILED DESCRIPTION

The embodiments of the technical solutions of the present application will be described more comprehensively below in conjunction with the accompanying drawings. The embodiments below are only for clearly illustrating the technical solutions of the present application, and thus are merely examples rather than limitations on the patent protection scope of the present application.

Unless otherwise defined, all technical and scientific terms used herein have the same meaning as commonly understood by those of ordinary skill in the art to which the present application pertains. The terms used in the specification of the present application herein are for the purpose of describing specific embodiments only and are not intended to limit the present application. The terms "comprise", "have", and any variations thereof in the specification, claims, and the above drawing description of the present application are intended to encompass non-exclusive inclusions.

The technical terms "first" and "second" mentioned in the description of the embodiments of the present application are merely used for distinguishing different objects, and cannot be construed as indicating or implying a relative importance, or implicitly specifying the number, specific order or primary-secondary relationship of the indicated technical features. In the description of the embodiments of the present application, "a plurality of" means two or more, unless otherwise defined explicitly and specifically.

The term "embodiment" means that specific features, structures, or characteristics described with reference to the embodiment can be included in at least one embodiment of the present application. The term "embodiment" appeared in various places in the specification does not necessarily refer to the same embodiment or an independent or alternative embodiment that is mutually exclusive of other embodiments. It can be explicitly and implicitly understood by those skilled in the art that the embodiment described herein can be combined with other embodiments.

The term "and/or" in the description of the embodiments of the present application merely describes a relationship between associated objects, indicating that three types of relationships may exist. For example, A and/or B can indicate three situations: only A exists, both A and B exist, and only B exists. In addition, the character "/" herein generally represents that the former and latter associated objects are in an "or" relationship.

The term "multiple" in the description of the embodiments of the present application means two or more. Similarly, "multiple groups" means two or more groups, and "multiple pieces" means two or more pieces.

In the description of the embodiments of the present application, for solutions, mixtures, slurries, etc., unless otherwise specified, the solvent is selected from at least one of distilled water, secondary water, deionized water, purified water, or ultrapure water.

In the embodiments of the present application, ppm denotes the mass of the test element relative to the mass of the sample, in parts per million.

In a first aspect, an embodiment of the present application provides an iron phosphate material. The iron phosphate material is represented by a general formula Fe₁₋ₓMₓPO₄·2H₂O, wherein M is selected from the group consisting of Mg, Ce, and a combination thereof, and 0.008≤x≤0.016.

In the technical solution of the embodiment of the present application, the dihydrate iron phosphate material is doped with element M, partially substituting element iron, thereby reducing the iron-to-phosphorus ratio of the iron phosphate material within an appropriate range, which promotes particle growth of the iron phosphate material. This approach facilitates the preparation of iron phosphate material with uniform particle size, and is beneficial to reducing the magnetic impurity content in the prepared cathode material and improving capacity of the cathode material, thereby improving the electrochemical performance of the cathode material.

In the technical solution of the embodiments of the present application, the iron phosphate material is a doped dihydrate iron phosphate material. Compared to anhydrous iron phosphate, the present technical solution not only achieves more uniform doping during the synthesis process but also facilitates greater particle growth during the sintering process for preparing the cathode material. Thus, a cathode material with a more suitable particle size can be obtained, thereby improving the electrochemical performance of the cathode material while maintaining the compaction density of the cathode material. Additionally, by substituting part of element iron with element M, the formation of magnetic substances such as elemental iron or iron phosphide is suppressed during the sintering process for preparing the cathode material. As such, the magnetic impurity content in the cathode material prepared from the iron phosphate material can be reduced.

Optionally, x=0.008, 0.009, 0.01, 0.012, 0.0125, 0.013, 0.0135, 0.014, 0.0145, 0.015, 0.0155, or 0.016, or x can fall within a range between any two of these values. Preferably, 0.012≤x≤0.016.

In some embodiments, an average particle size of primary particles of the iron phosphate material is in a range from 200 nm to 300 nm, preferably in a range from 240 nm to 300 nm.

In these embodiments, within the above average particle size range of primary particles of the iron phosphate material, the particle size of the iron phosphate material is more suitable, and the cathode material prepared from the iron phosphate material can have more appropriate particle size and distribution, thereby achieving a higher compaction density while also improving capacity. Optionally, the average particle size of primary particles of the iron phosphate material is 200 nm, 210 nm, 220 nm, 230 nm, 240 nm, 250 nm, 260 nm, 270 nm, 280 nm, 290 nm, or 300 nm, or the average particle size of primary particles of the iron phosphate material can fall within a range between any two of these particle sizes.

In some embodiments, in the primary particles of the iron phosphate material, the primary particle size is in a range from 10 nm to 2200 nm.

In these embodiments, within the above particle size range of primary particles of the iron phosphate material, the particle size of the iron phosphate material is more suitable, and the cathode material prepared from the iron phosphate material can have more appropriate particle size and distribution, thereby achieving a higher compaction density while also improving capacity. Optionally, in the primary particles of the iron phosphate material, the primary particle size is 10 nm, 20 nm, 50 nm, 100 nm, 200 nm, 500 nm, 1000 nm, 1500 nm, 2000 nm, or 2200 nm, or the primary particle size can fall within a range between any two of these particle sizes.

In some embodiments, in the primary particles of the iron phosphate material, a quantity proportion of primary particles with a particle size less than 100 nm is in a range from 15.3% to 23.7%, a quantity proportion of primary particles with a particle size between 100 nm and 400 nm is in a range from 63.3% to 73.6%, a quantity proportion of primary particles with a particle size greater than 400 nm but less than or equal to 1000 nm is in a range from 9.6% to 17.5%, and a quantity proportion of primary particles with a particle size greater than 1000 nm is in a range from 0.8% to 2.8%.

In these embodiments, the primary particles of the iron phosphate material have more suitable particle size distribution, and both the proportion of primary particles with a particle size less than 100 nm and the proportion of primary particles with a particle size greater than 1000 nm can be controlled, allowing the cathode material prepared from the iron phosphate material to have more uniform particle size, thereby achieving relatively high compaction density while also improving capacity.

Optionally, in the primary particles of the iron phosphate material, the quantity proportion of primary particles with a particle size less than 100 nm is 15.3%, 16%, 17%, 18%, 19%, 20%, 21%, 22%, 23%, or 23.7%, or in the primary particles of the iron phosphate material, the quantity proportion of primary particles with a particle size less than 100 nm can fall within a range between any two of these percentages. Preferably, in the primary particles of the iron phosphate material, the quantity proportion of primary particles with a particle size less than 100 nm is in a range from 16.4% to 22%.

Optionally, in the primary particles of the iron phosphate material, the quantity proportion of primary particles with a particle size between 100 nm and 400 nm is 63.3%, 64%, 65%, 66%, 67%, 68%, 69%, 70%, 71%, 72%, 73%, or 73.6%, or in the primary particles of the iron phosphate material, the quantity proportion of primary particles with a particle size between 100 nm and 400 nm can fall within a range between any two of these percentages. Preferably, in the primary particles of the iron phosphate material, the quantity proportion of primary particles with a particle size between 100 nm and 400 nm is in a range from 63.3% to 67.7%.

Optionally, in the primary particles of the iron phosphate material, the quantity proportion of primary particles with a particle size greater than 400 nm but less than or equal to 1000 nm is 9.6%, 10%, 11%, 12%, 13%, 14%, 15%, 16%, 17%, or 17.5%, or in the primary particles of the iron phosphate material, the quantity proportion of primary particles with a particle size greater than 400 nm but less than or equal to 1000 nm can fall within a range between any two of these percentages.

Optionally, in the primary particles of the iron phosphate material, the quantity proportion of primary particles with a particle size greater than 1000 nm is 0.8%, 1%, 1.5%, 2%, 2.5%, or 2.8%, or in the primary particles of the iron phosphate material, the quantity proportion of primary particles with a particle size greater than 1000 nm can fall within a range between any two of these percentages. Preferably, the quantity proportion of primary particles with a particle size greater than 1000 nm is in a range from 0.8% to 2.38%.

In some embodiments, an iron-to-phosphorus ratio of the iron phosphate material is in a range from 0.964 to 0.981, meaning that a ratio of amount of substance of iron to phosphorus in the iron phosphate material is in a range from 0.964 to 0.981.

In these embodiments, the above range of the iron-to-phosphorus ratio of the iron phosphate material is beneficial to achieving an appropriate particle size of the iron phosphate material, thereby allowing the cathode material prepared from the iron phosphate material to have more suitable particle size and distribution, achieving relatively high compaction density while also improving capacity. Optionally, the iron-to-phosphorus ratio of the iron phosphate material is 0.964, 0.965, 0.966, 0.967, 0.968, 0.969, 0.97, 0.971, 0.972, 0.973, 0.974, 0.975, 0.978, or 0.981, or the iron-to-phosphorus ratio of the iron phosphate material can fall within a range between any two of these iron-to-phosphorus ratios.

In a second aspect, an embodiment of the present application provides a cathode material. The cathode material is represented by a general formula LiFe_{1-y-z}M_{y}N_{z}PO₄@C, wherein M is selected from the group consisting of Mg, Ce, and a combination thereof, N is selected from the group consisting of Ti, Mn, and a combination thereof, 0.008≤y≤0.016, and 0.001≤z≤0.03.

In the technical solution of the embodiment of the present application, multi-level and multi-element doping of the lithium iron phosphate material with elements M and N is performed, which significantly improves the charge specific capacity and the discharge specific capacity of the cathode material. Meanwhile, within the doping range of element M and the doping range of element N, the cathode material can achieve relatively high compaction density while also exhibiting improved electrochemical performance, such as relatively high charge specific capacity, relatively high discharge specific capacity, and excellent rate performance.

Optionally, y=0.008, 0.009, 0.01, 0.012, 0.0125, 0.013, 0.0135, 0.014, 0.0145, 0.015, 0.0155, or 0.016, or y can fall within a range between any two of these values. Preferably, 0.012≤y≤0.016.

Optionally, z=0.001, 0.002, 0.005, 0.008, 0.01, 0.014, 0.015, 0.016, 0.017, 0.018, 0.019, 0.02, 0.022, 0.025, 0.028, or 0.03, or z can fall within a range between any two of these values. Preferably, 0.01≤z≤0.03, and more preferably, 0.02≤z≤0.025.

In some embodiments, the cathode material includes a core and a carbon coating layer covering a surface of the core. The core can be represented by a general formula LiFe_{1-y-z}M_{y}N_{z}PO₄, wherein M is selected from the group consisting of Mg, Ce, and a combination thereof, N is selected from the group consisting of Ti, Mn, and a combination thereof, 0.008≤y≤0.016, and 0.001≤z≤0.03. Preferably, 0.012≤y≤0.016. Preferably, 0.01≤z≤0.03, and more preferably, 0.02≤z≤0.025.

In some embodiments, a mass fraction of the carbon coating layer in the cathode material is in a range from 1% to 1.2%, preferably in a range from 1.15% to 1.2%.

The relatively small amount of carbon coating layer alleviates its inhibition on particle growth during the formation of the cathode material, facilitating the preparation of cathode material with more suitable particle size distribution and avoiding the reduction in compaction density caused by excessive carbon content, thereby improving the compaction density of the cathode material.

In some embodiments, an average particle size of primary particles of the cathode material is in a range from 340 nm to 415 nm, preferably in a range from 345 nm to 410 nm.

In these embodiments, within the above average particle size range of primary particles of the cathode material, the particle size of the cathode material is more suitable, which is beneficial to achieving relatively high compaction density of the cathode material while also achieving improved electrochemical performance, such as relatively high charge specific capacity, relatively high discharge specific capacity, and excellent rate performance of the cathode material. Optionally, the average particle size of primary particles of the cathode material is 340 nm, 350 nm, 360 nm, 370 nm, 380 nm, 390 nm, 400 nm, or 415 nm, or the average particle size of primary particles of the cathode material can fall within a range between any two of these particle sizes.

In some embodiments, in the primary particles of the cathode material, a quantity proportion of primary particles with a particle size less than 200 nm is in a range from 36.29% to 53.01%, a quantity proportion of primary particles with a particle size between 200 nm and 400 nm is in a range from 34.02% to 44.30%, a quantity proportion of primary particles with a particle size greater than 400 nm but less than or equal to 1000 nm is in a range from 8.05% to 17.48%, and a quantity proportion of primary particles with a particle size greater than 1000 nm is in a range from 0.60% to 1.93%.

In these embodiments, within the above particle size distribution proportion ranges of the primary particles of the cathode material, the cathode material has more suitable particle size distribution, which is beneficial to achieving relatively high compaction density of the cathode material while also achieving improved electrochemical performance, such as relatively high charge specific capacity, relatively high discharge specific capacity, and excellent rate performance of the cathode material.

Optionally, in the primary particles of the cathode material, the quantity proportion of primary particles with a particle size less than 200 nm is 36.29%, 38%, 40%, 42%, 44%, 46%, 48%, 50%, 52%, or 53.01%, or in the primary particles of the cathode material, the quantity proportion of primary particles with a particle size less than 200 nm can fall within a range between any two of these percentages. Preferably, in the primary particles of the cathode material, the quantity proportion of primary particles with a particle size less than 200 nm is in a range from 45.88% to 53.01%.

Optionally, in the primary particles of the cathode material, the quantity proportion of primary particles with a particle size between 200 nm and 400 nm is 34.02%, 35%, 36%, 37%, 38%, 39%, 40%, 41%, 42%, 43%, 44%, or 44.30%, or in the primary particles of the cathode material, the quantity proportion of primary particles with a particle size between 200 nm and 400 nm can fall within a range between any two of these percentages. Preferably, in the primary particles of the cathode material, the quantity proportion of primary particles with a particle size between 200 nm and 400 nm is in a range from 34.02% to 40.27%.

Optionally, in the primary particles of the cathode material, the quantity proportion of primary particles with a particle size greater than 400 nm but less than or equal to 1000 nm is 8.05%, 9%, 10%, 11%, 12%, 13%, 14%, 15%, 16%, 17%, or 17.48%, or in the primary particles of the cathode material, the quantity proportion of primary particles with a particle size greater than 400 nm but less than or equal to 1000 nm can fall within a range between any two of these percentages. Preferably, in the primary particles of the cathode material, the quantity proportion of primary particles with a particle size greater than 400 nm but less than or equal to 1000 nm is in a range from 8.05% to 15.09%.

Optionally, in the primary particles of the cathode material, the quantity proportion of primary particles with a particle size greater than 1000 nm is 0.60%, 0.7%, 0.8%, 0.9%, 1%, 1.1%, 1.2%, 1.4%, 1.6%, 1.8%, or 1.93%, or in the primary particles of the cathode material, the quantity proportion of primary particles with a particle size greater than 1000 nm can fall within a range between any two of these percentages. Preferably, in the primary particles of the cathode material, the quantity proportion of primary particles with a particle size greater than 1000 nm is in a range from 0.60% to 1.70%.

In some embodiments, a compaction density of the cathode material under a pressure of 3 kN is in a range from 2.57 g/cm³ to 2.68 g/cm³, preferably in a range from 2.58 g/cm³ to 2.68 g/cm³.

In these embodiments, the cathode material has relatively high compaction density, which is beneficial to improving the energy density of the cathode material, thereby enhancing the electrochemical performance of the cathode material. Optionally, the compaction density of the cathode material under a pressure of 3 kN is 2.57g/cm³, 2.58g/cm³, 2.59g/cm³, 2.6g/cm³, 2.61g/cm³, 2.62g/cm³, 2.63g/cm³, 2.64g/cm³, 2.65g/cm³, 2.66g/cm³, 2.67g/cm³ or 2.68g/cm³, or the compaction density of the cathode material under a pressure of 3 kN can fall within a range between any two of these compaction densities.

In some embodiments, a powder resistivity of the cathode material is in a range from 8.6 Ω·cm to 14 Ω·cm, preferably in a range from 8.6 Ω·cm to 10.6 Ω·cm.

In these embodiments, the cathode material within the above range of powder resistivity exhibits relatively high electron conductivity, facilitating thorough exploitation of the electrochemical performance of the active material in the cathode material and allowing more active material to participate in electrochemical reactions, thereby increasing the capacity of the secondary battery. Optionally, the powder resistivity of the cathode material is 8.6 Ω·cm, 8.8 Ω·cm, 9 Ω·cm, 9.2 Ω·cm, 9.4 Ω·cm, 9.6 Ω·cm, 9.8 Ω·cm, 10 Ω·cm, 11 Ω·cm, 12 Ω·cm, 13 Ω·cm, or 14 Ω·cm, or the powder resistivity of the cathode material can fall within the range between any two of these powder resistivities.

In some embodiments, a specific surface area of the cathode material is in a range from 10 m²/g to 13 m²/g, preferably in a range from 11 m²/g to 12.7 m²/g.

In these embodiments, the specific surface area within the above range is beneficial to controlling the contact area with an electrolyte and the reaction activity of the cathode material, thereby improving the electrochemical performance, such as the charge rate and the discharge rate of the cathode material. Optionally, the specific surface area of the cathode material is 10 m²/g, 11 m²/g, 11.2 m²/g, 11.4 m²/g, 11.6 m²/g, 11.8 m²/g, 12 m²/g, 12.2 m²/g, 12.4 m²/g, 12.6 m²/g, 12.8 m²/g or 13 m²/g, or the specific surface area of the cathode material can fall within the range between any two of these specific surface areas.

In some embodiments, a magnetic impurity content in the cathode material is less than or equal to 0.20 ppm, preferably 0.10 ppm.

In these embodiments, the magnetic impurity content within the above range in the cathode material is beneficial to improving the safety and reliability of the secondary battery using the cathode material. Optionally, the magnetic impurity content in the cathode material is 0, 0.02 ppm, 0.04 ppm, 0.06 ppm, 0.08 ppm, or 0.10 ppm, or the magnetic impurity content in the cathode material can fall within the range between any two of these contents.

In some embodiments, a static iron dissolution of the cathode material is in a range from 0.95 ppm to 4.88 ppm, preferably in a range from 0.95 ppm to 2.3 ppm.

In some embodiments, the static iron dissolution of the cathode material within the above range is beneficial to reducing the capacity decay of the cathode material, improving the service life of the secondary battery using the cathode material. Optionally, the static iron dissolution of the cathode material is in a range from 0.95 ppm to 4.88 ppm, or the static iron dissolution of the cathode material can fall within a range between any two of these static iron dissolutions.

In some embodiments, an initial charge specific capacity (25°C, 2 V to 3.75 V) of the cathode material at 1 C is in a range from 148.02 mAh/g to 152.1 mAh/g. Preferably, the initial charge specific capacity (25°C, 2 V to 3.75 V) of the cathode material at 1 C is in a range from 149.8 mAh/g to 152.1 mAh/g.

In some embodiments, an initial discharge specific capacity (25°C, 2 V to 3.75 V) of the cathode material at 1 C is in a range from 138.7 mAh/g to 142.38 mAh/g. Preferably, the initial discharge specific capacity (25°C, 2 V to 3.75 V) of the cathode material at 1 C is in a range from 140.45 mAh/g to 142.38 mAh/g.

In some embodiments, an initial discharge efficiency (25°C, 2 V to 3.75 V) of the cathode material at 1 C is in a range from 93.21% to 94.83%. Preferably, the initial discharge efficiency (25°C, 2 V to 3.75 V) of the cathode material at 1 C is in a range from 94.29% to 94.83%.

In some embodiments, an initial charge specific capacity (25°C, 2 V to 3.75 V) of the cathode material at 5 C is in a range from 112.5 mAh/g to 121.5 mAh/g. Preferably, the initial charge specific capacity (25°C, 2 V to 3.75 V) of the cathode material at 5 C is in a range from 115.6 mAh/g to 121.5 mAh/g.

In some embodiments, an initial discharge specific capacity (25°C, 2 V to 3.75 V) of the cathode material at 5 C is in a range from 98.98 mAh/g to 112.37 mAh/g. Preferably, the initial discharge specific capacity (25°C, 2 V to 3.75 V) of the cathode material at 5 C is in a range from 110.06 mAh/g to 112.37 mAh/g.

In some embodiments, an initial discharge efficiency (25°C, 2 V to 3.75 V) of the cathode material at 5 C is in a range from 87.98% to 97.89%. Preferably, the initial discharge efficiency (25°C, 2 V to 3.75 V) of the cathode material at 5 C is in a range from 94.99% to 97.89%.

In a third aspect, an embodiment of the present application provides a method for preparing a cathode material, including following steps:
mixing a first doping source with a ferrous solution to form a mixed solution;
mixing the mixed solution with a first phosphorus source and a first oxidizing agent and performing a first reaction treatment to obtain a first slurry;
mixing the first slurry with a second phosphorus source and a second oxidizing agent and performing a second reaction treatment to obtain a second slurry;
subjecting the second slurry to a first solid-liquid separation to obtain a first solid-phase material;
mixing the first solid-phase material with phosphoric acid and performing an aging treatment to obtain a third slurry;
subjecting the third slurry to a second solid-liquid separation to obtain a second solid-phase material;
subjecting the second solid-phase material to crystallization to obtain an iron phosphate material;
mixing the iron phosphate material, a lithium source, a second doping source, a surfactant, a carbon source, and a solvent to obtain a precursor slurry;
subjecting the precursor slurry to a grinding treatment and a drying treatment to obtain a precursor; and
sintering the precursor to obtain the cathode material;
wherein the first doping source contains a first doping element selected from the group consisting of Mg, Ce, and a combination thereof, a ratio of amount of substance of iron in the ferrous solution to the first doping element is (1-x):x, and 0.008≤x≤0.016; the second doping source contains a second doping element selected from the group consisting of Ti, Mn, and a combination thereof, a ratio of amount of substance of iron in the iron phosphate material to the second doping element in the second doping source is (1-y-z):z, 0.008≤y≤0.016, and 0.001≤z≤0.03.

In the technical solution of the embodiment of the present application, the preparation of the first solid-phase material is carried out in two steps. Nucleation partially occurs during the first reaction treatment, and the nuclei formed in the first step grow during the second reaction treatment, reducing the generation of small particles, thereby achieving an iron phosphate material with uniform particle size distribution and appropriate particle size. During the preparation of the iron phosphate material, the ferrous solution is mixed with the first doping source, and the cations of the first doping element coprecipitate with ferrous ions to form an internally doped compound, facilitating uniform doping and growth of the iron phosphate material, thereby obtaining an iron phosphate material with more uniform particle size distribution and doped with the first element. By doping the dihydrate iron phosphate material with element M which partially substitutes iron, the iron-to-phosphorus ratio in the iron phosphate material is appropriately reduced, promoting particle growth of the iron phosphate material and facilitating the preparation of an iron phosphate material with uniform particle size. In addition, this approach is also beneficial to reducing magnetic impurity content in the prepared cathode material and improve the capacity of the cathode material, thereby improving the electrochemical performance of the cathode material. During the preparation of the precursor, the second doping element is introduced, and the ratio of amount of substance of iron in the iron phosphate material to the second doping element in the second doping source is controlled to (1-y-z):z, wherein 0.008≤y≤0.016 and 0.001≤z≤0.03.Through this two-step doping process, the cathode material can be doped with less second doping element, improving rate performance of the cathode material. In the preparation method of the present application, a surfactant is introduced during grinding to improve the dispersibility of the iron phosphate material and reduce aggregation of the iron phosphate material during grinding, facilitating uniform particle growth during sintering, thereby achieving a cathode material with more uniform particle size distribution and appropriate particle size. The cathode material prepared by the method of the embodiment of the present application achieves high compaction density and improved electrochemical performance, such as high charge specific capacity, high discharge specific capacity, and excellent rate performance.

Optionally, x=0.008, 0.009, 0.010, 0.011, 0.012, 0.013, 0.014, 0.015, or 0.016, or x can fall within a range between any two of these values.

Optionally, y=0.008, 0.009, 0.010, 0.011, 0.012, 0.013, 0.014, 0.015, or 0.016, or y can fall within a range between any two of these values.

Optionally, z=0.001, 0.005, 0.01, 0.015, 0.02, 0.025, or 0.003, or z can fall within a range between any two of these values.

Preferably, 0.012 ≤ x ≤ 0.016.

Preferably, 0.012 ≤ y ≤ 0.016.

Preferably, 0.01≤z≤0.03, and more preferably, 0.02≤z≤0.025.

In some embodiments, the iron phosphate material prepared in the method for preparing the cathode material of the present embodiment is the above-described iron phosphate material.

In some embodiments, the cathode material prepared by the method of the present embodiment is the above-described cathode material.

In some embodiments, the first doping source includes at least one of magnesium sulfate heptahydrate or cerium nitrate.

In some embodiments, the first phosphorus source includes at least one of lithium dihydrogen phosphate or lithium monohydrogen phosphate.

In some embodiments, the first oxidizing agent includes a hydrogen peroxide solution, and a mass fraction of hydrogen peroxide in the hydrogen peroxide solution is in a range from 25% to 35%.

Optionally, the mass fraction of hydrogen peroxide in the hydrogen peroxide solution of the first oxidizing agent is 25%, 27.5%, 30%, 32.5%, or 35%, or the mass fraction of hydrogen peroxide in the hydrogen peroxide solution of the first oxidizing agent can fall within a range between any two of these mass fractions. Preferably, the mass fraction of hydrogen peroxide in the hydrogen peroxide solution of the first oxidizing agent is 27.5% or 30%.

In some embodiments, the second phosphorus source includes at least one of lithium dihydrogen phosphate or lithium monohydrogen phosphate.

In some embodiments, the second oxidizing agent includes a hydrogen peroxide solution, and a mass fraction of hydrogen peroxide in the hydrogen peroxide solution is in a range from 25% to 35%.

Optionally, the mass fraction of hydrogen peroxide in the hydrogen peroxide solution of the second oxidizing agent is 5%, 27.5%, 30%, 32.5%, or 35%, or the mass fraction of hydrogen peroxide in the hydrogen peroxide solution of the second oxidizing agent can fall within a range between any two of these mass fractions. Preferably, the mass fraction of hydrogen peroxide in the hydrogen peroxide solution of the second oxidizing agent is 27.5% or 30%.

The above first doping source, first phosphorus source, first oxidizing agent, second phosphorus source, and second oxidizing agent are adopted to reduce the introduction of impurities, facilitating the preparation of a high-purity iron phosphate material and thus facilitating the preparation of a high-purity cathode material.

In some embodiments, the mass fraction of hydrogen peroxide in the hydrogen peroxide solution of the first oxidizing agent can be the same as the mass fraction of hydrogen peroxide in the hydrogen peroxide solution of the second oxidizing agent, facilitating to preparing the first and second oxidizing agents at the same time thereby simplifying the process and reducing preparation cost.

In some embodiments, the lithium source includes at least one of lithium carbonate, lithium hydroxide, lithium oxalate, or lithium acetate.

In some embodiments, the second doping source includes at least one of titanium dioxide or manganese carbonate.

In some embodiments, the carbon source includes at least one of glucose or sucrose.

The above lithium source, second doping source, and carbon source are adopted to reduce the introduction of impurities, facilitating the preparation of a high-purity cathode material.

In some embodiments, the drying treatment is performed by spray drying.

In some embodiments, an inlet air temperature of spray drying is in a range from 150 °C to 350 °C, and an outlet air temperature of spray drying is in a range from 60 °C to 110 °C.

Optionally, the inlet temperature of spray drying is 150 °C, 180 °C, 200 °C, 220 °C, 250 °C, 280 °C, 300 °C, 320 °C, or 350 °C, or the inlet temperature of spray drying can fall within a range between any two of these temperatures. Optionally, the outlet temperature of spray drying is 60 °C, 70 °C, 80 °C, 90 °C, 100 °C, or 110 °C, or the outlet temperature of spray drying can fall within a range between any two of these temperatures.

In some embodiments, the sintering step is performed in a protective gas atmosphere.

In some embodiments, the protective gas includes at least one of nitrogen gas or argon gas.

In some embodiments, the step of mixing the mixed solution with the first phosphorus source and the first oxidizing agent, and performing the first reaction treatment to obtain the first slurry includes:
mixing the mixed solution with the first phosphorus source and the first oxidizing agent at a first mixing temperature for a first mixing time period, then reacting at a first reaction temperature for a first reaction time period to obtain the first slurry;
wherein the first mixing temperature is in a range from 25 °C to 50 °C, the first mixing time period is in a range from 20 min to 40 min, the first reaction time period is in a range from 20 min to 40 min, and the first reaction temperature is in a range from 50 °C to 70 °C.

In these embodiments, the first mixing temperature, the first mixing time period, the first reaction time period, and the first reaction temperature within the above ranges facilitate more complete growth of nuclei, thus facilitating the preparation of an iron phosphate material with more uniform particle size distribution and appropriate particle size.

Optionally, the first mixing temperature is 25 °C, 30 °C, 35 °C, 40 °C, 45 °C, or 50 °C, or the first mixing temperature can fall within a range between any two of these temperatures.

Optionally, the first mixing time period is 20 min, 25 min, 30 min, 35 min, or 40 min, or the first mixing time period can fall within a range between any two of these time periods.

Optionally, the first reaction time period is 20 min, 25 min, 30 min, 35 min, or 40 min, or the first reaction time period can fall within a range between any two of these time periods.

Optionally, the first reaction temperature is 50 °C, 55 °C, 60 °C, 65 °C, or 70 °C, or the first reaction temperature can fall within a range between any two of these temperatures.

In some embodiments, the step of mixing the first slurry with the second phosphorus source and the second oxidizing agent and performing the second reaction treatment to obtain the second slurry includes:
mixing the mixed solution with the second phosphorus source at a second mixing temperature for a second mixing time period to obtain a fourth slurry;
mixing the fourth slurry with the second oxidizing agent at a third mixing temperature for a third mixing time period, then reacting at a second reaction temperature for a second reaction time period to obtain the second slurry;
wherein the second mixing temperature is in a range from 45 °C to 60 °C, the second mixing time period is in a range from 3 min to 8 min, the third mixing temperature is in a range from 50 °C to 60 °C, the third mixing time period is in a range from 10 min to 16 min, the second reaction time period is in a range from 50 min to 70 min, and the second reaction temperature is in a range from 50 °C to 70 °C;
a mass ratio of the first phosphorus source to the second phosphorus source is (45 to 60):(40 to 55), and a mass ratio of the first oxidizing agent to the second oxidizing agent is (70 to 85):(15 to 30).

In these embodiments, the reaction parameters within the above ranges promote the growth of nuclei during the second reaction treatment, facilitating the preparation of an iron phosphate material with more uniform particle size distribution and appropriate particle size.

Optionally, the second mixing temperature is 45 °C, 50 °C, 55 °C, or 60 °C, or the second mixing temperature can fall within a range between any two of these temperatures.

Optionally, the second mixing time period is 3 min, 4 min, 5 min, 6 min, 7 min, or 8 min, or the second mixing time period can fall within a range between any two of these times.

Optionally, the third mixing temperature is 50 °C, 52 °C, 54 °C, 56 °C, 58 °C, or 60 °C, or the third mixing temperature can fall within a range between any two of these temperatures.

Optionally, the third mixing time period is 10 min, 11 min, 12 min, 13 min, 14 min, 15 min, or 16 min, or the third mixing time period can fall within a range between any two of these time periods.

Optionally, the second reaction time period is 50 min, 55 min, 60 min, 65 min, or 70 min, or the second reaction time period can fall within a range between any two of these time periods.

Optionally, the second reaction temperature is 50 °C, 52 °C, 54 °C, 56 °C, 58 °C, 60 °C, 62 °C, 64 °C, 66 °C, 68 °C, or 70 °C, or the second reaction temperature can fall within a range between any two of these temperatures.

Optionally, the mass ratio of the first phosphorus source to the second phosphorus source is 45:55, 45:50, 45:45, 45:40, 50:40, 55:40, or 60:40, or the mass ratio of the first phosphorus source to the second phosphorus source can fall within a range between any two of these mass ratios.

Optionally, the mass ratio of the first oxidizing agent to the second oxidizing agent is 85:30, 80:30, 75:30, 70:30, 70:25, 70:20, or 70:15, or the mass ratio of the first oxidizing agent to the second oxidizing agent can fall within a range between any two of these mass ratios.

In some embodiments, the step of subjecting the second slurry to the first solid-liquid separation to obtain the first solid-phase material includes:
subjecting the second slurry to the first solid-liquid separation to obtain a first solid material;
washing the first solid material until a conductivity of a first washing liquid after washing is less than or equal to 500 µS/cm to obtain the first solid-phase material.

In some embodiments, the first washing liquid is selected from at least one of deionized water, secondary water, distilled water, purified water, or ultrapure water.

In some embodiments, the first solid-liquid separation can be at least one of normal pressure filtration, pressure filtration, vacuum filtration, or centrifugation.

In some embodiments, the step of mixing the first solid-phase material with a phosphoric acid solution and performing the aging treatment to obtain the third slurry includes:
mixing the first solid-phase material with phosphoric acid to reach a pH value in a range from 1.2 to 1.7, then aging at an aging temperature for an aging time period to obtain the third slurry;
wherein the aging temperature is in a range from 75 °C to 95 °C, the aging time period is in a range from 1.5 h to 2.5 h, and the pH value of the third slurry is in a range from 1.7 to 2.

In some embodiments, a concentration of the phosphoric acid solution is in a range from 2.5 mol/L to 4.0 mol/L.

In these embodiments, the parameters of aging within the above ranges facilitate uniform particle growth, thereby obtaining an iron phosphate material with more uniform particle size distribution and appropriate particle size.

Optionally, the concentration of the phosphoric acid solution is 2.5 mol/L, 2.75 mol/L, 3 mol/L, 3.25 mol/L, 3.5 mol/L, 3.75 mol/L, or 4.0 mol/L, or the concentration of the phosphoric acid solution can fall within a range between any two of these concentrations.

Optionally, the first solid-phase material is mixed with the phosphoric acid solution to reach the pH value equal to 1.5, 1.55, 1.6, 1.65, or 1.7, or the first solid-phase material is mixed with the phosphoric acid solution to reach the pH value fall within a range between any two of these pH values.

In some embodiments, the step of mixing the first solid-phase material with the phosphoric acid solution to reach the pH value in a range from 1.2 to 1.7, then aging at the aging temperature for the aging time period to obtain the third slurry includes:
mixing the first solid-phase material with water to form a pre-mixed slurry;
mixing the pre-mixed slurry with the phosphoric acid solution to reach the pH value in a range from 1.2 to 1.7, then aging at the aging temperature for the aging time period to obtain the third slurry.

In some embodiments, the water is selected from at least one of deionized water, secondary water, distilled water, purified water, or ultrapure water.

Optionally, the aging temperature is 75 °C, 80 °C, 85 °C, 90 °C, or 95 °C, or the aging temperature can fall within a range between any two of these temperatures.

Optionally, the aging time period is 1.5 h, 1.8 h, 2 h, 2.2 h, or 2.5 h, or the aging time period can fall within a range between any two of these time periods.

Optionally, the pH value of the third slurry is 1.7, 1.8, 1.9, or 2, or the pH can fall within a range between any two of these pH values.

In some embodiments, after subjecting the precursor slurry to the grinding treatment, a D50 particle size of solid particles in the precursor slurry is in a range from 0.2 µm to 0.5 µm.

In these embodiments, the D50 particle size of the solid particles within the above range in the precursor slurry facilitates the preparation of a cathode material with more uniform particle size distribution and appropriate particle size. Optionally, after subjecting the precursor slurry to the grinding treatment, the D50 particle size of solid particles in the precursor slurry is 0.2 µm, 0.25 µm, 0.3 µm, 0.35 µm, 0.4 µm, 0.45 µm, or 0.5 µm, or after subjecting the precursor slurry to the grinding treatment, the D50 particle size of solid particles in the precursor slurry can fall within a range between any two of these particle sizes.

In some embodiments, a D50 particle size of the precursor is in a range from 3 µm to 6 µm.

In these embodiments, the D50 particle size of the precursor within the above range facilitates the preparation of a cathode material with more uniform particle size distribution and appropriate particle size. Optionally, the D50 particle size of the precursor is 3 µm, 3.5 µm, 4 µm, 4.5 µm, 5 µm, 5.5 µm, or 6 µm, or the D50 particle size of the precursor can fall within a range between any two of these particle sizes.

In some embodiments, a solid content of the precursor slurry is in a range from 40% to 55%, meaning that a mass fraction of solid particles in the precursor slurry is in a range from 40% to 55%, preferably 45%, 46%, 47%, 48%, 49%, 50%, 52%, etc.

In some embodiments, the step of subjecting the third slurry to the second solid-liquid separation to obtain the second solid-phase material includes:
subjecting the third slurry to the second solid-liquid separation to obtain a second solid material.

In some embodiments, the second solid-liquid separation can be at least one of normal pressure filtration, pressure filtration, vacuum filtration, or centrifugation.

In some embodiments, the step of subjecting the second solid-phase material to crystallization to obtain the iron phosphate material includes:
flash evaporating the second solid-phase material to obtain the iron phosphate material.

In some embodiments, the surfactant is selected from the group consisting of isooctanol polyoxyethylene polyoxypropylene ether-9, polyethylene glycol, and a combination thereof; a mass of the surfactant is 0.02% to 0.1% of a mass of the iron phosphate material.

In these embodiments, the mass ratio of the surfactant to the iron phosphate material within the above range is beneficial to improving the dispersibility of the iron phosphate material particles, ensuring uniform heating of the particles during sintering, thereby enhancing the consistency of particle growth to obtain a cathode material with more uniform particle size distribution and appropriate particle size. Optionally, the mass of the surfactant is 0.02%, 0.04%, 0.06%, 0.08%, or 0.1% of the mass of the iron phosphate material, or the mass of the surfactant can fall within a range between any two of these percentages of the mass of the iron phosphate material.

In some embodiments, the step of sintering the precursor to obtain the cathode material includes:
sintering the precursor at a first sintering temperature for a first sintering time period to obtain a pre-sintered material; and
sintering the pre-sintered material at a second sintering temperature for a second sintering time period to obtain the cathode material;
wherein the first sintering temperature is in a range from 400 °C to 500 °C, the first sintering time period is in a range from 1 h to 6 h, the second sintering temperature is in a range from 700 °C to 900 °C, and the second sintering time period is in a range from 4 h to 12 h.

In these embodiments, the parameters of the sintering treatment within the above ranges facilitate sufficient dehydration time and uniform heating of particles, resulting in better consistency in the growth of cathode material particles, thereby obtaining a cathode material with more uniform particle size distribution and appropriate particle size.

Optionally, the first sintering temperature is 400 °C, 420 °C, 440 °C, 460 °C, 480 °C, or 500 °C, or the first sintering temperature can fall within a range between any two of these temperatures.

Optionally, the first sintering time period is 1 h, 2 h, 3 h, 4 h, 5 h, or 6 h, or the first sintering time period can fall within a range between any two of these time periods.

Optionally, the second sintering temperature is 700 °C, 750 °C, 800 °C, 850 °C, or 900 °C, or the second sintering temperature can fall within a range between any two of these temperatures.

Optionally, the second sintering time period is 4 h, 6 h, 8 h, 10 h, or 12 h, or the second sintering time period can fall within a range between any two of these time periods.

In a fourth aspect, an embodiment of the present application provides an electrode plate, including a current collector and an electrode active layer disposed on the current collector. The electrode active layer includes the cathode material described in any one of the above embodiments or the cathode material prepared by the preparation method described in any one of the above embodiments.

In these embodiments, the active layer of the cathode plate includes the above cathode material, thus exhibiting excellent electrochemical performance.

In a fifth aspect, an embodiment of the present application provides a secondary battery, including a cathode plate and an anode plate, wherein the cathode plate includes the above-described electrode plate.

In these embodiments, the secondary battery includes the above-described cathode plate, thus achieving comprehensively improved electrochemical performance and being suitable for various application scenarios.

In a sixth aspect, an embodiment of the present application provides an electrical device.

The electrical devices provided in the embodiments of the present application can include, but are not limited to, smartphones, tablets, laptops, electric toys, power tools, electric bicycles, electric vehicles, ships, and spacecraft. The electric toys can include stationary or mobile electric toys, such as gaming consoles, electric toy cars, electric toy boats, and electric toy airplanes. The spacecraft can include aircraft, rockets, space shuttles, and spaceships.

The following further describes specific examples of the present application in detail. These examples are not to be construed as limiting the scope of the present application.

Unless otherwise defined, all technical terms used herein have the same meanings as commonly understood by those skilled in the art. The technical terms used herein are for the purpose of describing specific examples only and are not intended to limit the scope of the present application.

The following provides some specific examples. It should be understood that the examples described below are exemplary, and are only intended to explain the present application rather than being construed as limitation to the present application. Where specific techniques or conditions are not indicated in the examples, the procedures shall be carried out in accordance with the techniques or conditions described in the literatures in the field or in accordance with the product specification. The reagents or instruments for which no manufacturers are noted are all common products commercially available from the market.

### I. Preparation method

### Example 1

### Cathode Material Preparation Method:

(1) A titanium dioxide byproduct containing ferrous sulfate was heated and dissolved, and an alkali solution with a concentration of 5% (mass fraction) was added for sedimentation. The impurities therein were removed by pressure filtration, yielding a ferrous solution with a ferrous ion concentration of 1.5 mol/L and a pH value of 2.8.
(2) Industrial monoammonium phosphate was mixed with phosphoric acid and dissolved with water, filtered, and adjusted to neutral pH with ammonia water, obtaining a phosphorus source solution with a PO₄³⁻ concentration of 2 mol/L.
(3) Based on 1 mol of element iron, the ferrous solution was first introduced into a reactor as a base material, and then 0.012 mol of magnesium sulfate heptahydrate was added and stirred to dissolve. Subsequently, 50% of the phosphorus source (50% when the total molar amount of phosphorus element was 1 mol) along with 70% of a hydrogen peroxide solution with a mass fraction of 30% (i.e., 0.35 mol of hydrogen peroxide) were dropwise added within 30 minutes to proceed a synthesis reaction. The dropwise addition was performed at a temperature of 35 °C. After the dropwise addition was completed, the reaction solution was stirred and reacted at 60 °C for 30 minutes. After that, the remaining phosphorus source (the remaining 50% when the total molar amount of phosphorus element was 1 mol) was added in one batch at 52 °C, and stirred for 5 minutes. Then, the remaining 30% of the hydrogen peroxide solution with the mass fraction of 30% (i.e., 0.15 mol of hydrogen peroxide) was slowly dropwise added within 13 minutes at 55 °C. The reaction solution was stirred and reacted for 1 hour while the reaction temperature was maintained at 60 °C. Subsequently, the reacted solution was filtrated under pressure, and washed until the conductivity of the first washing liquid after washing was less than or equal to 500 µs/cm, and then formed into a slurry. Phosphoric acid was added to adjust the pH value to 1.4, and then the slurry was heated to 80 °C and stirred at a constant speed for 2 hours until the pH value reached 1.8. The slurry was then subjected to a second pressure filtration, followed by flash evaporation to obtain an iron phosphate material. The chemical formula of the iron phosphate material was Fe_{0.988}Mg_{0.012}PO₄·2H₂O, with an iron-to-phosphorus ratio of 0.966.
(4) The iron phosphate material was mixed with lithium carbonate, titanium dioxide, glucose monohydrate, isooctanol polyoxyethylene polyoxypropylene ether-9, and purified water, and stirred to obtain a precursor slurry with a solid content of 48.0%. The amount of substance of element lithium in the lithium carbonate was 1.04 times the amount of substance of element iron in the iron phosphate material. The titanium dioxide was 0.47% by mass of the iron phosphate material. The glucose monohydrate was 6.9% by mass of the iron phosphate material. The isooctanol polyoxyethylene polyoxypropylene ether-9 was 0.06% by mass of the iron phosphate material. The D50 particle size of the solid particles in the precursor slurry was adjusted to 0.36 µm through grinding. Then, the precursor slurry was spray dried at an inlet air temperature of 250 °C and an outlet air temperature of 85 °C to obtain a precursor. The D50 particle size of the precursor was adjusted to 4.5 µm. Subsequently, under a nitrogen protective atmosphere, the precursor was heated at a rate of 2 °C/min to 450 °C and held for 2 hours, then heated at a rate of 5 °C/min to 783 °C and held for 8 hours, and then cooled to below 100 °C using water cooling and air cooling, then discharged from the furnace and pulverized to obtain a cathode material.

The chemical formula of the cathode material in the present example was LiFe_{0.966}Ti_{0.022}Mg_{0.012}PO₄@C.

### Example 2

### Cathode Material Preparation Method:

The preparation method of the cathode material in Example 2 was the same or similar to that in Example 1, with the following differences: In step (3) of this example, based on 1 mol of element iron, the ferrous solution was first introduced into a reactor as a base material, and then 0.016 mol of magnesium sulfate heptahydrate was added and stirred to dissolve. Subsequently, 60% of the phosphorus source (60% when the total molar amount of phosphorus element was 1 mol) along with 75% of a hydrogen peroxide solution with a mass fraction of 30% (i.e., 0.375 mol of hydrogen peroxide) were dropwise added within 20 minutes to proceed a synthesis reaction. The dropwise addition was performed at a temperature of 25 °C. After the dropwise addition was completed, the reaction solution was stirred and reacted at 50 °C for 20 minutes. After that, the remaining phosphorus source (the remaining 40% when the total molar amount of phosphorus element was 1 mol) was added in one batch at 45 °C, and stirred for 3 minutes. Then, the remaining hydrogen peroxide solution (i.e., 0.125 mol of hydrogen peroxide) was slowly dropwise added within 10 minutes at 50 °C. The reaction solution was stirred and reacted for 50 minutes while the reaction temperature was maintained under 50 °C. Subsequently, the reacted solution was filtrated under pressure, and washed until the conductivity of the first washing liquid after washing was less than or equal to 500 µs/cm, and then formed into a slurry. Phosphoric acid was added to adjust the pH value to 1.2, and then the slurry was heated to 75 °C and stirred at a constant speed for 1.5 hours until the pH value reached 1.7. The slurry was then subjected to a second pressure filtration, followed by flash evaporation to obtain an iron phosphate material. The chemical formula of the iron phosphate material was Fe_{0.984}Mg_{0.016}PO₄·2H₂O, with an iron-to-phosphorus ratio of 0.964.

The chemical formula of the cathode material in the present example was LiFe_{0.962}Ti_{0.022}Mg_{0.016}PO₄@C.

### Example 3

### Cathode Material Preparation Method:

The preparation method of the cathode material in Example 3 was the same or similar to that in Example 1, with the following differences: In step (3) of this example, based on 1 mol of element iron, the ferrous solution was first introduced into a reactor as a base material, and then 0.014 mol of magnesium sulfate heptahydrate was added and stirred to dissolve. Subsequently, 45% of the phosphorus source (45% when the total molar amount of phosphorus element was 1 mol) along with 85% of a hydrogen peroxide solution (i.e., 0.425 mol of hydrogen peroxide) were dropwise added within 40 minutes to proceed a synthesis reaction. The dropwise addition was performed at a temperature of 50 °C. After the dropwise addition was completed, the reaction solution was stirred and reacted at 70 °C for 40 minutes. After that, the remaining phosphorus source (the remaining 55% when the total molar amount of phosphorus element was 1 mol) was added in one batch at 60 °C, and stirred for 8 minutes. Then, the remaining hydrogen peroxide solution (i.e., 0.075 mol of hydrogen peroxide) was slowly dropwise added within 16 minutes at 60 °C. The reaction solution was stirred and reacted for 70 minutes while the reaction temperature was maintained at 70 °C. Subsequently, the reacted solution was filtrated under pressure, and washed until the conductivity of the first washing liquid after washing was less than or equal to 500 µs/cm, and then formed into a slurry. Phosphoric acid was added to adjust the pH value to 1.7, and then the slurry was heated to 95 °C and stirred at a constant speed for 2.5 hours until the pH value reached 2. The slurry was then subjected to a second pressure filtration, followed by flash evaporation to obtain an iron phosphate material. The chemical formula of the iron phosphate material was Fe_{0.986}Mg_{0.014}PO₄·2H₂O, with an iron-to-phosphorus ratio of 0.968.

The chemical formula of the cathode material in the present example was LiFe_{0.964}Ti_{0.022}Mg_{0.014}PO₄@C.

### Example 4

### Cathode Material Preparation Method:

The preparation method of the cathode material in Example 4 was the same or similar to that in Example 1, with the following differences: In step (3) of this example, based on 1 mol of element iron, the ferrous solution was first introduced into a reactor as a base material, and then 0.014 mol of cerium nitrate was added and stirred to dissolve. Subsequently, 55% of the phosphorus source (55% when the total molar amount of phosphorus element was 1 mol) along with 75% of a hydrogen peroxide solution (i.e., 0.375 mol of hydrogen peroxide) were dropwise added within 30 minutes to proceed a synthesis reaction. The dropwise addition was performed at a temperature of 35 °C. After the dropwise addition was completed, the reaction solution was stirred and reacted at 60 °C for 30 minutes. After that, the remaining phosphorus source (the remaining 45% when the total molar amount of phosphorus element was 1 mol) was added in one batch at 52 °C, and stirred for 5 minutes. Then, the remaining hydrogen peroxide solution (i.e., 0.125 mol of hydrogen peroxide) was slowly dropwise added within 13 minutes at 55 °C. The reaction solution was stirred and reacted for 1 hour while the reaction temperature was maintained at 60 °C. Subsequently, the reacted solution was filtrated under pressure, and washed until the conductivity of the first washing liquid after washing was less than or equal to 500 µs/cm, and then formed into a slurry. Phosphoric acid was added to adjust the pH value to 1.6, and then the slurry was heated to 85 °C and stirred at a constant speed for 2 hours until the pH value reached 1.8. The slurry was then subjected to a second pressure filtration, followed by flash evaporation to obtain an iron phosphate material. The chemical formula of the iron phosphate material was Fe_{0.986}Ce_{0.014}PO₄·2H₂O, with an iron-to-phosphorus ratio of 0.967.

The chemical formula of the cathode material in the present example was LiFe_{0.964}Ti_{0.022}Ce_{0.014}PO₄@C.

### Example 5

### Cathode Material Preparation Method:

The preparation method of the cathode material in Example 5 was the same or similar to that in Example 4, with the following differences: In step (4) of this example, the iron phosphate material was mixed with lithium carbonate, titanium dioxide, glucose monohydrate, isooctanol polyoxyethylene polyoxypropylene ether-9, and purified water, and stirred to obtain a precursor slurry with a solid content of 48.0%. The amount of substance of element lithium in the lithium carbonate was 1.04 times the amount of substance of element iron in the iron phosphate material. The titanium dioxide was 0.53% by mass of the iron phosphate material. The glucose monohydrate was 6.9% by mass of the iron phosphate material. The isooctanol polyoxyethylene polyoxypropylene ether-9 was 0.08% by mass of the iron phosphate material. The D50 particle size of the solid particles in the precursor slurry was adjusted to 0.2 µm through grinding. Then, the precursor slurry was spray dried at an inlet air temperature of 150 °C and an outlet air temperature of 60 °C to obtain a precursor. The D50 particle size of the precursor was adjusted to 3 µm. Subsequently, under a nitrogen protective atmosphere, the precursor was heated at a rate of 2 °C/min to 400 °C and held for 6 hours, then heated at a rate of 5 °C/min to 700 °C and held for 12 hours, and then cooled to below 100 °C using water cooling and air cooling, then discharged from the furnace and pulverized to obtain a cathode material.

The chemical formula of the cathode material in the present example was LiFe_{0.961}Ti_{0.025}Ce_{0.014}PO₄@C.

### Example 6

### Cathode Material Preparation Method:

The preparation method of the cathode material in Example 6 was the same or similar to that in Example 4, with the following differences: In step (4) of this example, the iron phosphate material was mixed with lithium carbonate, manganese carbonate, glucose monohydrate, isooctanol polyoxyethylene polyoxypropylene ether-9, and purified water, and stirred to obtain a precursor slurry with a solid content of 48.0%. The amount of substance of element lithium in the lithium carbonate was 1.04 times the amount of substance of element iron in the iron phosphate material. The manganese carbonate was 0.53% by mass of the iron phosphate material. The glucose monohydrate was 7.1% by mass of the iron phosphate material. The isooctanol polyoxyethylene polyoxypropylene ether-9 was 0.02% by mass of the iron phosphate material. The D50 particle size of the solid particles in the precursor slurry was adjusted to 0.5 µm through grinding. Then, the precursor slurry was spray dried at an inlet air temperature of 350 °C and an outlet air temperature of 110 °C to obtain a precursor. The D50 particle size of the precursor was adjusted to 6 µm. Subsequently, under a nitrogen protective atmosphere, the precursor was heated at a rate of 2 °C/min to 500 °C and held for 1 hours, then heated at a rate of 5 °C/min to 900 °C and held for 4 hours, and then cooled to below 100 °C using water cooling and air cooling, then discharged from the furnace and pulverized to obtain a cathode material.

The chemical formula of the cathode material in the present example was LiFe_{0.968}Mn_{0.018}Ce_{0.014}PO₄@C.

### Example 7

### Cathode Material Preparation Method:

The preparation method of the cathode material in Example 7 was the same or similar to that in Example 4, with the following differences: In step (4) of this example, the titanium dioxide was replaced with a mixture of titanium dioxide and manganese carbonate in a mass ratio of 3:1. The total mass of the mixture of titanium dioxide and manganese carbonate was 0.54% of the mass of the iron phosphate material, and the mass of glucose monohydrate was 7.1% of the mass of the iron phosphate material. Under a nitrogen protective atmosphere, the precursor was heated at a rate of 2 °C/min to 400 °C and held for 2 hours, then heated at a rate of 5 °C/min to 785°C and held for 8 hours.

### Cathode Material:

The chemical formula of the cathode material in the present example was LiFe_{0.969}Ti_{0.017}Mn_{0.0005}Ce_{0.014}PO₄@C.

### Example 8

### Cathode Material Preparation Method:

The preparation method of the cathode material in Example 8 was the same or similar to that in Example 4, with the following differences: in this example, the mass of titanium dioxide was 0.24% of the mass of the iron phosphate material.

The chemical formula of the cathode material in the present example was LiFe_{0.976}Ti_{0.01}Ce_{0.014}PO₄@C.

### Example 9

### Cathode Material Preparation Method:

The preparation method of the cathode material in Example 9 was the same or similar to that in Example 4, with the following differences: in this example, the mass of titanium dioxide was 0.63% of the mass of the iron phosphate material.

The chemical formula of the cathode material in the present example was LiFe_{0.956}Ti_{0.03}Ce_{0.014}PO₄@C.

### Example 10

### Cathode Material Preparation Method:

The preparation method of the cathode material in Example 10 was the same or similar to that in Example 1, with the following differences: In step (3) of this example, 0.01 mol of magnesium sulfate heptahydrate was added, and the chemical formula of the iron phosphate material was Fe_{0.99}Mg_{0.01}PO₄·2H₂O, with an iron-to-phosphorus ratio of 0.978.

The chemical formula of the cathode material in the present example was LiFe_{0.968}Ti_{0.022}Mg_{0.01}PO₄@C.

### Example 11

### Cathode Material Preparation Method:

The preparation method of the cathode material in Example 11 was the same or similar to that in Example 1, with the following differences: In step (3) of Example 11, 0.008 mol of magnesium sulfate heptahydrate was added, and the chemical formula of the iron phosphate material was Fe_{0.992}Mg_{0.008}PO₄·2H₂O, with an iron-to-phosphorus ratio of 0.981.

The chemical formula of the cathode material in the present example was LiFe_{0.970}Ti_{0.022}Mg_{0.008}PO₄@C.

### Example 12

### Cathode Material Preparation Method:

The preparation method of the cathode material in Example 12 was the same or similar to that in Example 4, with the following differences: In step (4) of this example, the iron phosphate material was mixed with lithium carbonate, titanium dioxide, glucose monohydrate, polyethylene glycol, and purified water, and stirred to obtain a precursor slurry with a solid content of 55.0%. The amount of substance of element lithium in the lithium carbonate was 1.04 times the amount of substance of element iron in the iron phosphate material. The titanium dioxide was 0.47% by mass of the iron phosphate material. The glucose monohydrate was 6.9% by mass of the iron phosphate material. The polyethylene glycol was 0.1% by mass of the iron phosphate material. The D50 particle size of the solid particles in the precursor slurry was adjusted to 0.24 µm through grinding. Then, the precursor slurry was spray dried at an inlet air temperature of 250 °C and an outlet air temperature of 85 °C to obtain a precursor. The D50 particle size of the precursor was adjusted to 4.5 µm. Subsequently, under a nitrogen protective atmosphere, the precursor was heated at a rate of 2 °C/min to 400 °C and held for 4 hours, then heated at a rate of 5 °C/min to 850 °C and held for 5 hours, and then cooled to below 100 °C using water cooling and air cooling, then discharged from the furnace and pulverized to obtain a cathode material.

The chemical formula of the cathode material in the present example was LiFe_{0.964}Ti_{0.022}Ce_{0.014}PO₄@C.

### Comparative Example 1

The preparation method of the cathode material in Comparative Example 1 was the same or similar to that in Example 1, with the following differences: In step (4) of Comparative Example 1, neither titanium dioxide nor a dispersant was added, and the chemical formula of the iron phosphate material was Fe_{0.988}Mg_{0.012}PO₄·2H₂O, with an iron-to-phosphorus ratio of 0.966.

The chemical formula of the cathode material in Comparative Example 1 was LiFe_{0.988}Mg_{0.012}PO₄@C.

### Comparative Example 2

### Cathode Material Preparation Method:

The preparation method of the cathode material in Comparative Example 2 was the same or similar to that in Example 1, with the following differences: In step (3) of Comparative Example 2, no magnesium sulfate heptahydrate was added, and the chemical formula of the iron phosphate material was FePO₄·2H₂O, with an iron-to-phosphorus ratio of 0.974.

The chemical formula of the cathode material in Comparative Example 2 was LiFe_{0.978}Ti_{0.022}PO₄@C.

### Comparative Example 3

### Cathode Material Preparation Method:

The preparation method of the cathode material in Comparative Example 3 was the same or similar to that in Example 1, with the following differences: In step (3) of Comparative Example 3, the flash evaporation to obtain the iron phosphate material was replaced with drying in a rotary kiln to obtain anhydrous iron phosphate. The chemical formula of the anhydrous iron phosphate was Fe_{0.988}Mg_{0.012}PO₄.

The chemical formula of the cathode material in Comparative Example 3 was LiFe_{0.966}Ti_{0.022}Mg_{0.012}PO₄@C.

### II. Test Methods

The contents of elements in the cathode materials prepared in Examples 1 to 12 and Comparative Examples 1 to 3 were tested. The composition of elements was determined through inductively coupled plasma optical emission spectroscopy (ICP-OES). The free lithium content was measured using potentiometric titration. The carbon (C) content was tested using a carbon-sulfur analyzer. The test results are shown in Table 1 below:

**Table 1**

| | Chemical Formula | C (%) | Ti (ppm) | Ce (ppm) | Mg (ppm) | Mn (ppm) | Free Li (ppm) |
|---|---|---|---|---|---|---|---|
| Example 1 | LiFe_{0.966}Ti_{0.022}Mg_{0.012} PO₄@C | 1.18 | 2203.7 | 0 | 1239.6 | 14.6 | 195 |
| Example 2 | LiFe_{0.962}Ti_{0.022}Mg_{0.016} PO₄@C | 1.18 | 2200.4 | 0 | 1593.2 | 13.8 | 198 |
| Example 3 | LiFe_{0.964}Ti_{0.022}Mg_{0.014} PO₄@C | 1.18 | 2198.3 | 0 | 1406.1 | 16.6 | 206 |
| Example 4 | LiFe_{0.964}Ti_{0.002}Ce_{0.014} PO₄@C | 1.18 | 2176.5 | 1429.6 | 23.7 | 14.2 | 193 |
| Example 5 | LiFe_{0.961}Ti_{0.025}Ce_{0.014} PO₄@C | 1.18 | 2498.2 | 1406.4 | 15.9 | 13.2 | 196 |
| Example 6 | LiFe_{0.968}Mn_{0.018}Ce_{0.01 4}PO₄@C | 1.20 | 8.4 | 1483.7 | 22.6 | 1850.3 | 194 |
| Example 7 | LiFe_{0.969}Ti_{0.017}Mn_{0.000 5}Ce_{0.014}PO₄@C | 1.20 | 1707.4 | 1487.3 | 18.4 | 506.3 | 197 |
| Example 8 | LiFe_{0.976}Ti_{0.01}Ce_{0.014}P O₄@C | 1.20 | 1003.8 | 1425.3 | 21.7 | 11.8 | 165 |
| Example 9 | LiFe_{0.956}Ti_{0.03}Ce_{0.014}P O₄@C | 1.20 | 3047.4 | 1406.8 | 9.5 | 11.6 | 276 |
| Example 10 | LiFe_{0.968}Ti_{0.022}Mg_{0.01}P O₄@C | 1.18 | 2196.3 | 3.6 | 1006.7 | 14.2 | 209 |
| Example 11 | LiFe_{0.970}Ti_{0.022}Mg_{0.008} PO₄@C | 1.18 | 2203.8 | 5.1 | 794.9 | 19.3 | 184 |
| Example 12 | LiFe_{0.964}Ti_{0.022}Ce_{0.014} PO₄@C | 1.08 | 2176.5 | 1429.6 | 23.7 | 14.2 | 286 |
| Comparative Example 1 | LiFe_{0.988}Mg_{0.012}PO₄@ C | 1.19 | 16.3 | 5.8 | 1207.3 | 27.4 | 136 |
| Comparative Example 2 | LiFe_{0.978}Ti_{0.022}PO₄@ C | 1.18 | 2208.5 | 4.7 | 18.3 | 21.7 | 165 |
| Comparative Example 3 | LiFe_{0.966}Ti_{0.022}Mg_{0.012} PO₄@C | 1.24 | 2206.3 | 0 | 1230.7 | 14.4 | 140 |

The performance of the iron phosphate materials and cathode materials prepared in Examples 1 to 12 and Comparative Examples 1 to 3 was tested. The powder resistivity was measured using the four-probe method with a measurement pressure of 8 MPa. The compaction density was measured under a pressure of 3 tons. The specific surface area was determined using the gas adsorption BET method. The particle size was statistically analyzed using Nano Measurer 1.2.5 after SEM imaging. The magnetic impurity content was tested as follows: 100 g of the material was weighed and placed into a plastic bottle with a lid, 1000 g of purified water was added, followed by adding an 8000 GS magnet coated with polytetrafluoroethylene for protection. The lid was tightly closed, and the plastic bottle was laid horizontally and rotated at a speed of 10 r/min to 20 r/min for 30 minutes to 45 minutes. After stopping the rotation, the magnet was removed and added to another plastic bottle, followed by adding 1000 g of purified water. Then, the bottle was tightly closed with a lid, and was rotated horizontally at 10 r/min to 20 r/min for 5 minutes to 10 minutes. After stopping the rotation, the magnet was removed, and then added into aqua regia to perform dissolution, and the resulting solution was analyzed using ICP to measure the nickel, chromium, copper, zinc, and iron contents. The total mass of nickel, chromium, copper, zinc, and iron was calculated and divided by the mass of the material, thereby obtaining the magnetic impurity content of the material.

The test results of the iron phosphate materials are shown in Table 2 below:

**Table 2**

| Iron phosphate material | Particle size distribution of primary particles (Quantity proportion %) | | | | Fe:P | Magnetic impurity content (ppm) | Formula | Average particle size of primary particles (µm) |
|---|---|---|---|---|---|---|---|---|
| | Less than 100nm | 100nm to 400nm | Greater than 400nm but less than or equal to 1000nm | Greater than 1000nm | | | | |
| Example 1 | 20.8 | 65.7 | 12.3 | 1.2 | 0.966 | 0.292 | Fe_{0.988}Mg_{0.012}PO ₄·2H₂O | 0.26 |
| Example 2 | 20.4 | 65.3 | 13.5 | 0.8 | 0.964 | 0.264 | Fe_{0.984}Mg_{0.016}PO ₄·2H₂O | 0.28 |
| Example 3 | 21.9 | 67.7 | 9.6 | 0.8 | 0.968 | 0.232 | Fe_{0.986}Mg_{0.014}PO ₄·2H₂O | 0.26 |
| Example 4 | 21.0 | 66.3 | 11.7 | 1.0 | 0.967 | 0.221 | Fe_{0.986}Ce_{0.014}PO₄ ·2H₂O | 0.24 |
| Example 5 | 21.0 | 66.3 | 11.7 | 1.0 | 0.967 | 0.249 | Fe_{0.986}Ce_{0.014}PO₄ ·2H₂O | 0.27 |
| Example 6 | 21.0 | 66.3 | 11.7 | 1.0 | 0.967 | 0.217 | Fe_{0.986}Ce_{0.014}PO₄ ·2H₂O | 0.30 |
| Example 7 | 21.0 | 66.3 | 11.7 | 1.0 | 0.967 | 0.226 | Fe_{0.986}Ce_{0.014}PO₄ ·2H₂O | 0.28 |
| Example 8 | 21.0 | 66.3 | 11.7 | 1.0 | 0.967 | 0.251 | Fe_{0.986}Ce_{0.014}PO₄ ·2H₂O | 0.30 |
| Example 9 | 21.0 | 66.3 | 11.7 | 1.0 | 0.967 | 0.290 | Fe_{0.986}Co_{0**.**014}PO₄ ·2H₂O | 0.27 |
| Example 10 | 16.6 | 70.9 | 11.4 | 1.1 | 0.978 | 0.147 | Fe_{0.99}Mg_{0.01}P0₄· 2H₂O | 0.24 |
| Example 11 | 15.3 | 73.6 | 10.2 | 0.9 | 0.981 | 0.193 | Fe_{0.992}Mg_{0.008}PO ₄·2H₂O | 0.24 |
| Example 12 | 21.0 | 66.3 | 11.7 | 1.0 | 0.967 | 0.254 | Fe_{0.986}Ce_{0.014}PO₄ ·2H₂O | 0.20 |
| Comparative Example 1 | 20.8 | 65.7 | 12.3 | 1.2 | 0.966 | 0.292 | Fe_{0.988}Mg_{0.012}PO ₄·2H₂O | 0.33 |
| Comparative Example 2 | 18.4 | 62.1 | 17.5 | 2.0 | 0.974 | 0.357 | FePO₄·2H₂O | 0.36 |
| Comparative Example 3 | 16.4 | 58.8 | 21.2 | 3.6 | 0.966 | 0.531 | Fe_{0.988}Mg_{0.012}PO ₄ | 0.42 |

The test results of the cathode materials are shown in Tables 3 and 4 below:

**Table 3**

| Cathode material | Compaction density (g/cm³) | Powder resistivity (Ω·cm) | Specific surface area (m²/g) | Static iron dissolution (ppm) | Magnetic impurity content (ppm) |
|---|---|---|---|---|---|
| Example 1 | 2.58 | 9.40 | 12.03 | 1.26 | 0.002 |
| Example 2 | 2.61 | 9.78 | 11.97 | 1.17 | 0.001 |
| Example 3 | 2.59 | 9.17 | 12.36 | 2.03 | 0.000 |
| Example 4 | 2.59 | 9.41 | 11.96 | 0.95 | 0.002 |
| Example 5 | 2.62 | 9.40 | 11.85 | 1.17 | 0.002 |
| Example 6 | 2.67 | 8.96 | 11.07 | 2.26 | 0.000 |
| Example 7 | 2.65 | 8.78 | 11.63 | 1.85 | 0.001 |
| Example 8 | 2.68 | 8.67 | 11.60 | 2.07 | 0.009 |
| Example 9 | 2.57 | 10.56 | 12.67 | 0.99 | 0.030 |
| Example 10 | 2.63 | 9.03 | 11.58 | 1.02 | 0.019 |
| Example 11 | 2.65 | 9.16 | 11.73 | 1.07 | 0.003 |
| Example 12 | 2.57 | 13.72 | 10.08 | 4.88 | 0.085 |
| Comparative Example 1 | 2.51 | 12.94 | 13.46 | 7.96 | 0.031 |
| Comparative Example 2 | 2.47 | 13.55 | 14.02 | 6.88 | 0.027 |
| Comparative Example 3 | 2.53 | 13.88 | 13.06 | 6.73 | 0.063 |

**Table 4**

| Cathode material | Particle size distribution of primary particles (Quantity proportion %) | | | | Average particle size of primary particles (µm) | Maximum particle size (µm) |
|---|---|---|---|---|---|---|
| | Less than 200nm | 200nm to 400nm | Greater than 400nm but less than or equal to 1000nm | Greater than 1000nm | | |
| Example 1 | 53.01 | 37.09 | 9.20 | 0.70 | 345 | 0.97 |
| Example 2 | 50.09 | 40.18 | 8.92 | 0.81 | 350 | 1.23 |
| Example 3 | 52.29 | 39.06 | 8.05 | 0.60 | 340 | 1.09 |
| Example 4 | 50.26 | 36.28 | 12.03 | 1.43 | 395 | 0.96 |
| Example 5 | 45.88 | 39.53 | 13.52 | 1.07 | 410 | 1.43 |
| Example 6 | 49.41 | 34.02 | 15.09 | 1.48 | 385 | 1.24 |
| Example 7 | 47.98 | 40.27 | 10.05 | 1.70 | 400 | 1.37 |
| Example 8 | 51.26 | 37.78 | 9.15 | 1.81 | 395 | 1.44 |
| Example 9 | 50.41 | 33.49 | 15.12 | 0.98 | 385 | 1.02 |
| Example 10 | 50.41 | 38.42 | 9.77 | 1.30 | 390 | 1.16 |
| Example 11 | 48.03 | 35.12 | 16.22 | 0.63 | 388 | 0.95 |
| Example 12 | 36.29 | 44.30 | 17.48 | 1.93 | 415 | 1.76 |
| Comparative Example 1 | 9.34 | 46.37 | 41.87 | 2.42 | 420 | 2.06 |
| Comparative Example 2 | 7.58 | 47.29 | 42.92 | 2.21 | 435 | 2.19 |
| Comparative Example 3 | 34.76 | 50.33 | 19.04 | 3.47 | 430 | 4.47 |

The cathode materials prepared in Examples 1 to 12 and Comparative Examples 1 to 3 were respectively mixed with conductive carbon black and PVDF binder in a mass ratio of 90:5:5, coated onto 12 µm thick aluminum foil to form the electrode plates, which were then dried in an oven at 110°C for 10 hours. The dried electrode plates were punched into cathode electrode discs with a diameter of 15 mm and pressed to a compaction density of 2.5 g/cm³ by rolling. The counter electrodes were 16 mm diameter lithium discs. The electrolyte was 1M LiPF₆ dissolved in EC:EMC:DEC with a volume ratio of 1:1:1. The batteries were assembled in a LG2400/1000TS glove box manufactured by Weige Gas Purification Technology (Suzhou) Co., Ltd., yielding coin-type half-cells, which were subjected to rate performance testing.

The rate performance testing was conducted respectively at rates of 1 C and 5 C using the battery performance testing system (Model: CT3002A) from Wuhan LAND Electronics Co., Ltd., with a testing temperature of 25°C and a voltage range of 2V to 3.75V. The results are shown in Table 5 below.

**Table 5**

| / | 1C initial charge specific capacity (mAh/g) | 1C initial discharge specific capacity (mAh/g) | 1C initial discharge efficiency (%) | 5C initial charge specific capacity (mAh/g) | 5C initial discharge specific capacity (mAh/g) | 5C initial discharge efficiency (%) |
|---|---|---|---|---|---|---|
| Example 1 | 148.97 | 140.7 | 94.45 | 112.63 | 110.23 | 97.89 |
| Example 2 | 148.8 | 140.7 | 94.56 | 114.7 | 110.1 | 95.99 |
| Example 3 | 148.85 | 140.8 | 94.59 | 113.9 | 109.6 | 96.22 |
| Example 4 | 148.95 | 140.45 | 94.29 | 113.8 | 108.1 | 94.99 |
| Example 5 | 149.83 | 140.50 | 93.77 | 114.63 | 108.23 | 94.41 |
| Example 6 | 148.64 | 140.96 | 94.83 | 115.3 | 109.74 | 95.18 |
| Example 7 | 150.27 | 140.98 | 93.82 | 115.6 | 110.06 | 95.21 |
| Example 8 | 148.8 | 138.70 | 93.21 | 116.35 | 107.78 | 92.63 |
| Example 9 | 148.95 | 140.70 | 94.46 | 117.96 | 111.29 | 94.35 |
| Example 10 | 149.8 | 140.45 | 93.76 | 117.73 | 109.67 | 93.15 |
| Example 11 | 152.1 | 142.38 | 93.61 | 121.50 | 112.37 | 92.48 |
| Example 12 | 148.02 | 138.76 | 93.74 | 112.5 | 98.98 | 87.98 |
| Comparative Example 1 | 147.55 | 136.17 | 92.28 | 110.28 | 95.73 | 86.81 |
| Comparative Example 2 | 148.15 | 135.68 | 91.58 | 108.25 | 93.14 | 86.04 |
| Comparative Example 3 | 145.33 | 132.02 | 90.84 | 100.07 | 76.26 | 74.21 |

### III. Analysis of Test Results of Examples and Comparative Examples

It can be seen from the data in Tables 1 to 5 that the cathode materials provided by the examples of the present application have a compaction density ranged from 2.57 g/ml to 2.68 g/ml. In the tested examples, the 1C initial discharge efficiency (2V to 3.75V) is ranged from 93.21% to 94.83%, and the 5C initial discharge efficiency (2V to 3.75V) is ranged from 87.98% to 97.89%. In each example, dihydrate iron phosphate doped with element M was used as the precursor, and the particle size distribution of both the iron phosphate material and the cathode material was controlled through the two-step doping process, resulting in a cathode material with high compaction density and excellent rate performance.

Compared to the cathode materials obtained in the examples, the cathode material in Comparative Example 1 exhibited poorer growth consistency and less uniform particle size distribution, leading to a lower compaction density and inferior rate performance of the cathode material obtained in Comparative Example 1.

In Comparative Example 2, no first doping source was added, and the iron-to-phosphorus ratio of the iron phosphate material was 0.974, leading to inferior effect of controlling the uniform growth of iron phosphate material particles, resulting in less uniform particle size distribution, lower compaction density, and inferior rate performance of the cathode material obtained in Comparative Example 2 compared to that in the examples.

Compared to the cathode materials obtained in the examples, the anhydrous iron phosphate prepared by drying in a rotary kiln in Comparative Example 3 exhibited poorer uniformity in particle size distribution, leading to less uniform particle size distribution and higher magnetic impurity content in the cathode material obtained in Comparative Example 3. As a result, the cathode material obtained in Comparative Example 3 has a lower compaction density and inferior rate performance.

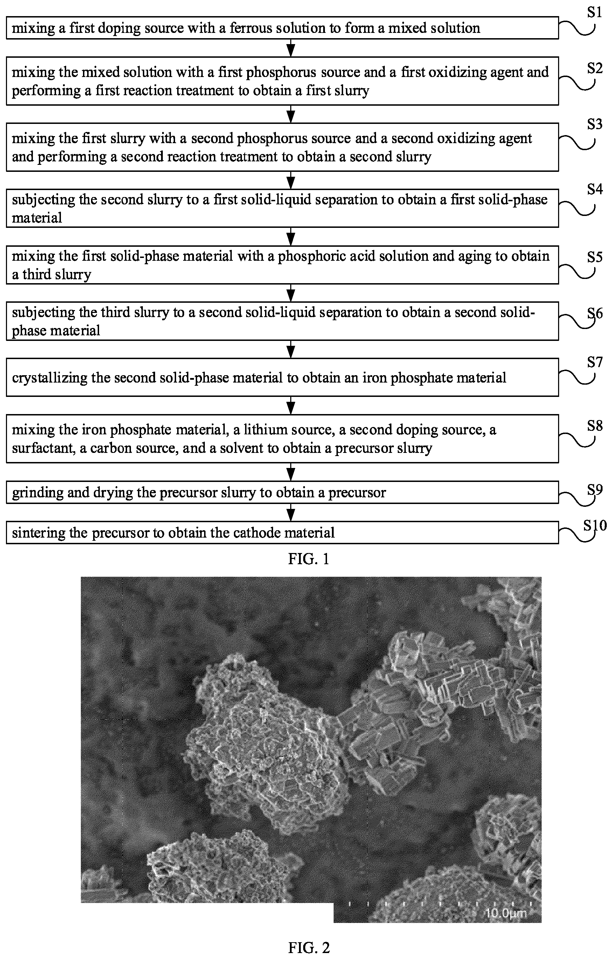

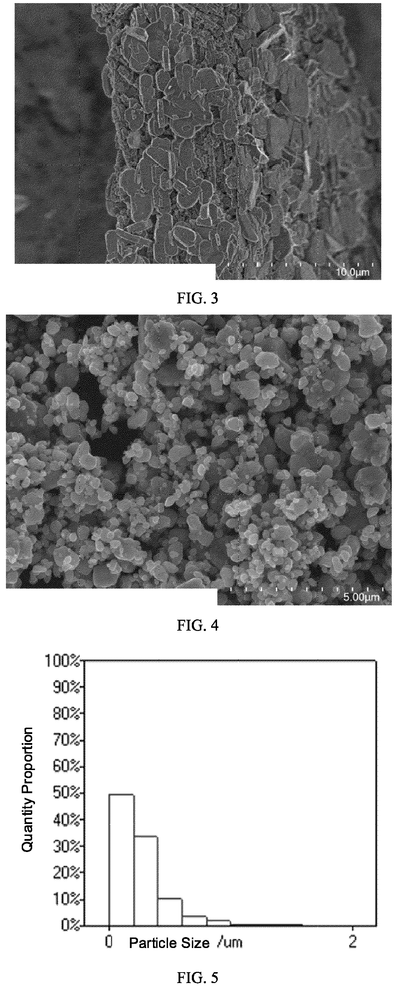

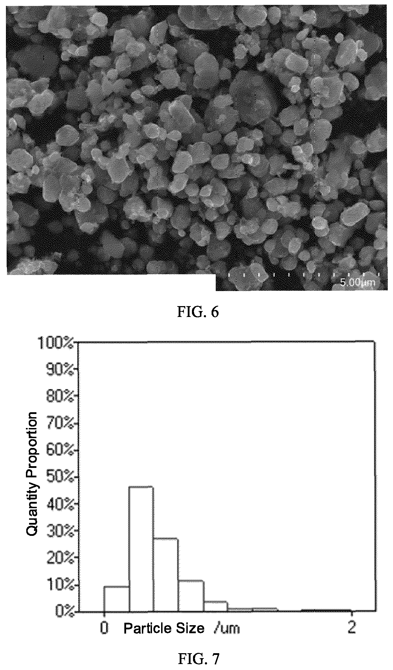

It can be seen by comparing FIG. 2 and FIG. 3 that the doping during the preparation of the dihydrate iron phosphate precursor significantly improved the morphology of the precursor. In Example 1 of the present application, doping with element M resulted in an iron phosphate material with a combination of spherical and columnar shapes, whereas in Comparative Example 2, where no doping was applied to the dihydrate iron phosphate, the iron phosphate material only exhibited a flaky morphology. Comparing FIG. 4 to FIG. 7, it can be observed that, compared to the cathode material obtained in Comparative Example 2, the particle size distribution of primary particles of the cathode material prepared in Example 1 of the present application was more concentrated, with fewer particles larger than 1000 nm, leading to superior electrochemical performance.

Compared to other examples, Example 8 adopted a lower doping amount of Ti, leading to a cathode material with a higher compaction density but poorer rate performance, whereas Example 9 adopted a higher doping amount of Ti, leading to better rate performance but a lower compaction density. Comparing Examples 8, 9, and the other examples, it can be concluded that controlling z to satisfy 0.02≤z≤0.025 is beneficial for achieving a cathode material with balanced compaction density and rate performance.

Compared to other examples, in Example 12, the sintering temperature during the preparation of the cathode material was 850°C, which was relatively high. This higher temperature led to an increase in side reactions, promoting the formation of magnetic impurities such as iron phosphide. Consequently, the magnetic impurity content in the cathode material obtained in Example 12 was relatively high.

It should be noted that the scope of the present application is not limited by the above implementations. The above implementations are only examples, and within the scopes of the technical solutions of the present application, any implementations having the compositions with substantially the same technical conceptions and achieving the same effects all fall within the technical scope of the present application. Furthermore, without departing from the main conception of the present application, various modifications that a person skilled in the art may conceive upon the implementations, as well as other embodiments constructed by combining part of composing elements of the implementations, are also included within the scope of the present application.

## Claims

1. An iron phosphate material, represented by a general formula Fe₁₋ₓMₓPO₄·2H₂O, wherein M is selected from the group consisting of Mg, Ce, and a combination thereof, and 0.008≤x≤0.016.

2. The iron phosphate material according to claim 1, wherein an average particle size of primary particles of the iron phosphate material is in a range from 200 nm to 300 nm; and/or
in the primary particles of the iron phosphate material, a quantity proportion of primary particles with a particle size less than 100 nm is in a range from 15.3% to 23.7%, a quantity proportion of primary particles with a particle size between 100 nm and 400 nm is in a range from 63.3% to 73.6%, a quantity proportion of primary particles with a particle size greater than 400 nm but less than or equal to 1000 nm is in a range from 9.6% to 17.5%, and a quantity proportion of primary particles with a particle size greater than 1000 nm is in a range from 0.8% to 2.8%.

3. The iron phosphate material according to claim 1 or 2, wherein an iron-to-phosphorus ratio of the iron phosphate material is in a range from 0.964 to 0.981.

4. A cathode material, represented by a general formula LiFe_{1-y-z}M_{y}N_{z}PO₄@C, wherein M is selected from the group consisting of Mg, Ce, and a combination thereof, N is selected from the group consisting of Ti, Mn, and a combination thereof, 0.008≤y≤0.016, and 0.001≤z≤0.03.

5. The cathode material according to claim 4, wherein an average particle size of primary particles of the cathode material is in a range from 340 nm to 415 nm; and/or
in the primary particles of the cathode material, a quantity proportion of primary particles with a particle size less than 200 nm is in a range from 36.29% to 53.01%, a quantity proportion of primary particles with a particle size between 200 nm and 400 nm is in a range from 34.02% to 44.30%, a quantity proportion of primary particles with a particle size greater than 400 nm but less than or equal to 1000 nm is in a range from 8.05% to 17.48%, and a quantity proportion of primary particles with a particle size greater than 1000 nm is in a range from 0.60% to 1.93%.

6. The cathode material according to claim 4 or 5, wherein a compaction density of the cathode material under a pressure of 3 kN is in a range from 2.57 g/cm³ to 2.68 g/cm³; and/or
a powder resistivity of the cathode material is in a range from 8.6 Ω·cm to 14 Ω·cm; and/or
a specific surface area of the cathode material is in a range from 10 m²/g to 13 m²/g; and/or
a magnetic impurity content in the cathode material is less than or equal to 0.10 ppm.

7. A method for preparing a cathode material, comprising following steps:
mixing a first doping source with a ferrous solution to form a mixed solution;
mixing the mixed solution with a first phosphorus source and a first oxidizing agent and performing a first reaction treatment to obtain a first slurry;
mixing the first slurry with a second phosphorus source and a second oxidizing agent and performing a second reaction treatment to obtain a second slurry;
subjecting the second slurry to a first solid-liquid separation to obtain a first solid-phase material;
mixing the first solid-phase material with a phosphoric acid solution and performing an aging treatment to obtain a third slurry;
subjecting the third slurry to a second solid-liquid separation to obtain a second solid-phase material;
subjecting the second solid-phase material to crystallization to obtain an iron phosphate material;
mixing the iron phosphate material, a lithium source, a second doping source, a surfactant, a carbon source, and a solvent to obtain a precursor slurry;
subjecting the precursor slurry to a grinding treatment and a drying treatment to obtain a precursor; and
sintering the precursor to obtain the cathode material;
wherein the first doping source contains a first doping element selected from the group consisting of Mg, Ce, and a combination thereof, a ratio of amount of substance of iron in the ferrous solution to the first doping element is (1-x):x, and 0.008≤x≤0.016; the second doping source contains a second doping element selected from the group consisting of Ti, Mn, and a combination thereof, a ratio of amount of substance of iron in the iron phosphate material to the second doping element in the second doping element is (1-y-z):z, 0.008≤y≤0.016, and 0.001≤z≤0.03.

8. The method according to claim 7, wherein mixing the mixed solution with the first phosphorus source and the first oxidizing agent, and performing the first reaction treatment to obtain the first slurry comprises:
mixing the mixed solution with the first phosphorus source and the first oxidizing agent at a first mixing temperature for a first mixing time period, then reacting at a first reaction temperature for a first reaction time period to obtain the first slurry;
wherein the first mixing temperature is in a range from 25 °C to 50 °C, the first mixing time period is in a range from 20 min to 40 min, the first reaction time period is in a range from 20 min to 40 min, and the first reaction temperature is in a range from 50 °C to 70 °C.

9. The method according to claim 7, wherein mixing the first slurry with the second phosphorus source and the second oxidizing agent and performing the second reaction treatment to obtain the second slurry comprises:
mixing the mixed solution with the second phosphorus source at a second mixing temperature for a second mixing time period to obtain a fourth slurry;
mixing the fourth slurry with the second oxidizing agent at a third mixing temperature for a third mixing time period, then reacting at a second reaction temperature for a second reaction time period to obtain the second slurry;
wherein the second mixing temperature is in a range from 45 °C to 60 °C, the second mixing time period is in a range from 3 min to 8 min, the third mixing temperature is in a range from 50 °C to 60 °C, the third mixing time period is in a range from 10 min to 16 min, the second reaction time period is in a range from 50 min to 70 min, and the second reaction temperature is in a range from 50 °C to 70 °C;
a mass ratio of the first phosphorus source to the second phosphorus source is (45 to 60):(40 to 55), and a mass ratio of the first oxidizing agent to the second oxidizing agent is (70 to 85):(15 to 30).

10. The method according to claim 7, wherein mixing the first solid-phase material with the phosphoric acid solution and performing the aging treatment to obtain the third slurry comprises:
mixing the first solid-phase material with the phosphoric acid solution to reach a pH value in a range from 1.2 to 1.7, then aging at an aging temperature for an aging time period to obtain the third slurry;
wherein the aging temperature is in a range from 75 °C to 95 °C, the aging time period is in a range from 1.5 h to 2.5 h, and the pH value of the third slurry is in a range from 1.7 to 2.

11. The method according to claim 7, wherein after subjecting the precursor slurry the grinding treatment, a D50 particle size of solid particles in the precursor slurry is in a range from 0.2 µm to 0.5 µm; and/or
a D50 particle size of the precursor is in a range from 3 µm to 6 µm; and/or
the surfactant is selected from the group consisting of isooctanol polyoxyethylene polyoxypropylene ether-9, polyethylene glycol, and a combination thereof; a mass of the surfactant is 0.02% to 0.1% of a mass of the iron phosphate material.

12. The method according to claim 7, wherein sintering the precursor to obtain the cathode material comprises:
sintering the precursor at a first sintering temperature for a first sintering time period to obtain a pre-sintered material; and
sintering the pre-sintered material at a second sintering temperature for a second sintering time period to obtain the cathode material;
wherein the first sintering temperature is in a range from 400°C to 500°C, the first sintering time period is in a range from 1 h to 6 h, the second sintering temperature is in a range from 700°C to 900°C, and the second sintering time period is in a range from 4 h to 12 h.

13. An electrode plate, comprising a current collector and an electrode active layer disposed on the current collector, wherein the electrode active layer comprises the cathode material according to any one of claims 4 to 6 or the cathode material prepared by the method according to any one of claims 7 to 12.

14. A secondary battery, comprising a cathode plate and an anode plate, wherein the cathode plate comprises the electrode plate according to claim 13.
